(19) **Europäisches Patentamt / European Patent Office / Office européen des brevets**

(11) **EP 4 572 446 A1**

(12) **EUROPEAN PATENT APPLICATION**
published in accordance with Art. 153(4) EPC

(43) Date of publication:
**18.06.2025 Bulletin 2025/25**

(21) Application number: 23853076.0

(22) Date of filing: **11.08.2023**

(51) International Patent Classification (IPC):
**H04W 64/00** (2009.01)    **H04W 24/08** (2009.01)
**H04W 56/00** (2009.01)    **G01S 5/02** (2010.01)

(52) Cooperative Patent Classification (CPC):
**G01S 5/02; H04W 24/08; H04W 56/00; H04W 64/00**

(86) International application number:
**PCT/KR2023/011946**

(87) International publication number:
**WO 2024/035210 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.08.2022 KR 20220100919
30.09.2022 KR 20220125133**

(71) Applicant: **LG Electronics Inc.**
**Yeongdeungpo-gu**
**Seoul 07336 (KR)**

(72) Inventors:
- **SHIM, Jaenam**
  **Seoul 06772 (KR)**
- **AHN, Joonkui**
  **Seoul 06772 (KR)**
- **HWANG, Seunggye**
  **Seoul 06772 (KR)**
- **KO, Hyunsoo**
  **Seoul 06772 (KR)**

(74) Representative: **Plasseraud IP**
**104 Rue de Richelieu**
**CS92104**
**75080 Paris Cedex 02 (FR)**

(54) **METHOD BY WHICH TERMINAL PERFORMS MEASUREMENT IN WIRELESS COMMUNICATION SYSTEM, AND DEVICE THEREFOR**

(57)    A method by which a terminal measures a carrier phase, and a device therefor, according to various embodiments are disclosed. Disclosed are the method and the device therefor, the method comprising the steps of: receiving positioning setting information from a network; measuring on the basis of the positioning setting information; and reporting the measurement results to the network, wherein the positioning setting information includes information about a differencing resource set including a plurality of PRS resources for removing a timing error in carrier phase measurement, and the measurement results include a phase difference value measured using two PRS resources having a pair relationship included in the differencing resource set.

FIG. 12

Receive positioning configuration information related to carrier phase measurement — S121

Measure phase difference between paired PRS resources based on differencing resource set included in positioning configuration information — S123

Report/transmit measurement result including measurement information about phase difference to network — S125

**Description**

**TECHNICAL FIELD**

The present disclosure relates to a method and apparatus for performing positioning based on phase information in a wireless communication system.

**BACKGROUND**

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

**DISCLOSURE**

**TECHNICAL PROBLEM**

An object of the present disclosure is to provide a method and apparatus for enabling a user equipment (UE) to fast and easily determine a PRS resource pair suitable for performing differencing by predefining/preconfiguring pair PRS resources suitable for the differencing.

It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

**TECHNICAL SOLUTION**

According to an aspect, a method of measuring a carrier phase by a user equipment (UE) in a wireless communication system may include receiving positioning configuration information from a network, performing the measurement based on the positioning configuration information, and reporting a measurement result to the network. The positioning configuration information may include information about a differencing resource set including a plurality of positioning reference signal (PRS) resources related to elimination of a timing error in the carrier phase measurement, and the measurement result may include a phase difference value measured using two PRS resources in a pair relationship included in the differencing resource set.

Alternatively, the measurement result may include a phase difference value between a reference PRS resource determined based on at least one of a reference PRS resource identification (ID), a reference PRS resource set ID, or a reference transmission and reception point (TRP) ID indicated for the differencing resource set, and a pair PRS resource in the pair relationship with the reference PRS resource.

Alternatively, the reference PRS resource and the pair PRS resource are related to different TRP IDs.

Alternatively, the reference TRP ID may correspond to a reference TRP ID configured for time-difference-of-arrival (TDoA).

Alternatively, based on the reference PRS resource paired with a plurality of PRS resources, the pair PRS resource may be determined as a PRS resource with a best measurement quality among the plurality of PRS resources.

Alternatively, the measurement information may further include information about the measurement quality of the pair PRS resource.

Alternatively, the measurement information may further include information about an ID of the pair PRS resource.

Alternatively, the positioning configuration information may be received through system information.

Alternatively, based on the positioning configuration not configuring a reference PRS resource, the UE may determine a PRS resource having a highest PRS ID in the differencing resource set as the reference PRS resource.

According to another aspect, a UE for measuring a carrier phase in a wireless communication system may include a radio frequency (RF) transceiver and a processor connected to the RF transceiver. The processor may control the RF transceiver to receive, from a network, positioning configuration information including information about a differencing resource set including a plurality of PRS resources related to elimination of a timing error in the carrier phase measurement, perform the measurement based on the positioning configuration information, and report, to the network, a measurement result including a phase difference value measured using two PRS resources in a pair relationship included in the differencing resource set.

According to another aspect, a method of receiving measurement information related to measurement of a carrier phase from a UE by a network in a wireless communication system may include transmitting, to the UE, positioning configuration information including information about a differencing resource set including a plurality of PRS resources related to elimination of a timing error in the carrier phase measurement, and receiving, from the UE, measurement information including a phase difference value measured using two PRS resources in a pair relationship included in the differencing resource set.

## ADVANTAGEOUS EFFECTS

Various embodiments may enable a user equipment (UE) to fast and easily determine a PRS resource pair suitable for performing differencing by predefining/preconfiguring pair PRS resources suitable for the differencing.

Alternatively, a network may clearly and fast predict/identify PRS resources for which a phase difference included in measurement information has been measured and reported, based on a pair relationship or mapping relationship.

Alternatively, a clock error may be effectively eliminated by performing differencing based on the pair PRS resources. Alternatively, the accuracy of positioning of the UE based on CPP or CPM may be greatly improved by effectively eliminating the clock error.

The effects obtainable from the present disclosure are not limited to the effects described above, and other effects not described may be clearly understood by those skilled in the art to which the present disclosure belongs from the description below.

## BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.

FIG. 1 illustrates the structure of an LTE system.
FIG. 2 illustrates the structure of an NR system.
FIG. 3 illustrates the structure of an NR radio frame.
FIG. 4 illustrates the slot structure of an NR frame.
FIG. 5 is a diagram illustrating physical channels and a signal transmission method using the physical channels, which may be used in the embodiment;
FIG. 6 is a diagram illustrating a positioning protocol configuration for positioning a user equipment (UE), to which various embodiments are applicable.
FIG. 7 illustrates an exemplary system architecture for measuring positioning of a UE to which various embodiments are applicable.
FIG. 8 illustrates an implementation example of a network for UE positioning.
FIG. 9 is a diagram illustrating protocol layers for supporting LTE positioning protocol (LPP) message transmission, to which various embodiments are applicable.
FIG. 10 is a diagram illustrating protocol layers for supporting NR positioning protocol a (NRPPa) protocol data unit (PDU) transmission, to which various embodiments are applicable.
FIG. 11 is a diagram illustrating an observed time difference of arrival (OTDOA) positioning method, to which various embodiments are applicable.
FIG 12 is a diagram illustrating a method of performing a measurement operation related to carrier phase measurement by a UE.
FIG. 13 is a diagram illustrating a method of receiving measurement information related to carrier phase measurement from a UE by a network.
FIG. 14 illustrates a communication system applied to the present disclosure;
FIG. 15 illustrates wireless devices applicable to the present disclosure.
FIG. 16 illustrates another example of a wireless device to which the present disclosure is applied.

## DETAILED DESCRIPTION

Various embodiments are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA).

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto.

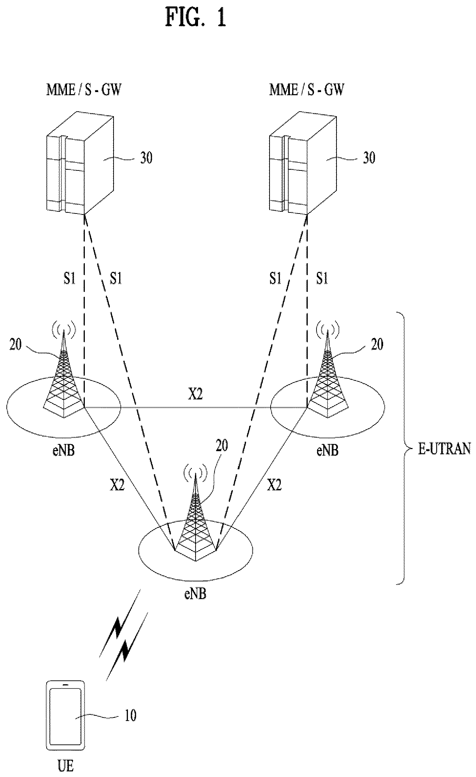

FIG. 1 illustrates the structure of an LTE system to which the present disclosure is applicable. This may also be called an evolved UMTS terrestrial radio access network (E-UTRAN) or LTE/LTE-A system.

Referring to FIG. 1, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

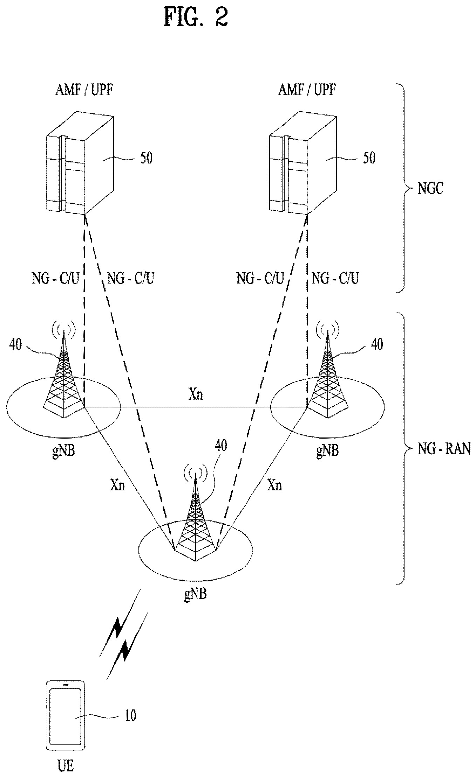

FIG. 2 illustrates the structure of a NR system.

Referring to FIG. 2, a next generation radio access network (NG-RAN) may include a next generation Node B (gNB) and/or an eNB, which provides user-plane and control-plane protocol termination to a UE. In FIG. 2, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

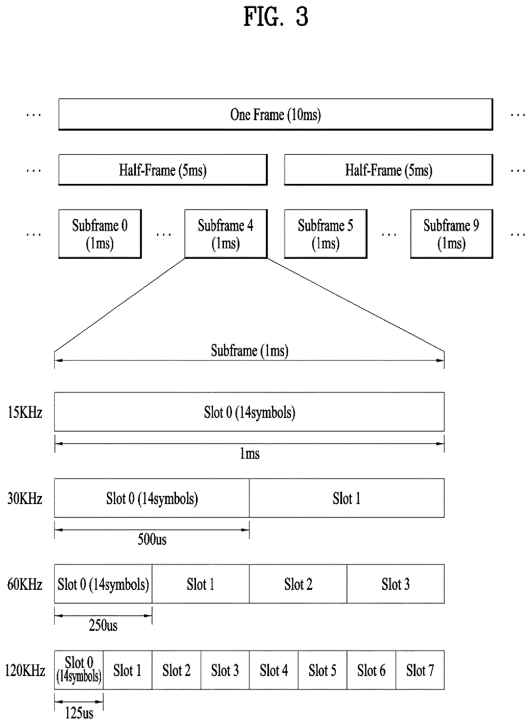

FIG. 3 illustrates the structure of a NR radio frame to which the present disclosure is applicable.

Referring to FIG. 3, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

[Table 2]

| SCS ($15*2^u$) | $N^{slot}_{symb}$ | $N^{frame.u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description). In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

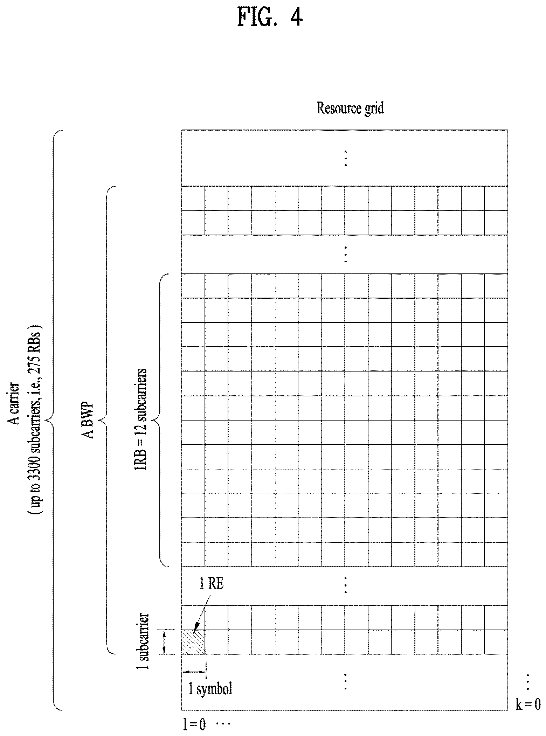

FIG. 4 illustrates the slot structure of a NR frame.

Referring to FIG. 4, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

## Bandwidth part (BWP)

In the NR system, up to 400 MHz may be supported per component carrier (CC). If a UE operating on a wideband CC always operates with the RF for the entire CCs turned on, the battery consumption of the UE may be increased. Alternatively, considering various use cases (e.g., eMBB, URLLC, Mmtc, V2X, etc.) operating within one wideband CC, different numerologies (e.g., sub-carrier spacings) may be supported for different frequency bands within a specific CC. Alternatively, the capability for the maximum bandwidth may differ among the UEs. In consideration of this, the BS may instruct the UE to operate only in a partial bandwidth, not the entire bandwidth of the wideband CC. The partial bandwidth is defined as a bandwidth part (BWP) for simplicity. Here, the BWP may be composed of resource blocks (RBs) contiguous on the frequency axis, and may correspond to one numerology (e.g., sub-carrier spacing, CP length, slot/mini-slot duration).

The BS may configure multiple BWPs in one CC configured for the UE. For example, a BWP occupying a relatively small frequency region may be configured in a PDCCH monitoring slot, and a PDSCH indicated by the PDCCH in a larger BWP may be scheduled. Alternatively, when UEs are concentrated in a specific BWP, some of the UEs may be configured in another BWP for load balancing. Alternatively, a spectrum in the middle of the entire bandwidth may be punctured and two BWPs on both sides may be configured in the same slot in consideration of frequency-domain inter-cell interference cancellation between neighbor cells. That is, the BS may configure at least one DL/UL BWP for the UE associated with the wideband CC and activate at least one DL/UL BWP among the configured DL/UL BWP(s) at a specific time (through L1 signaling, MAC CE or RRC signalling, etc.). The BS may instruct the UE to switch to another configured DL/UL BWP (through L1 signaling, MAC CE or RRC signalling, etc.). Alternatively, when a timer expires, the UE may switch to a predetermined DL/UL BWP. The activated DL/UL BWP is defined as an active DL/UL BWP. The UE may fail to receive DL/UL BWP configuration during an initial access procedure or before an RRC connection is set up. A DL/UL BWP assumed by the UE in this situation is defined as an initial active DL/UL BWP.

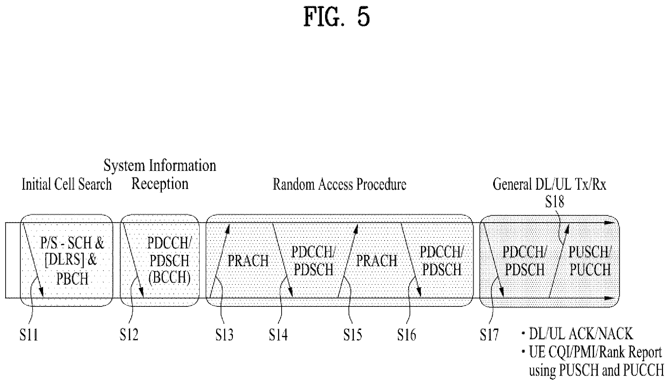

FIG. 5 is a diagram illustrating physical channels and a signal transmission method using the physical channels, which may be used in various embodiments.

Referring to FIG. 5, when powered on or when a UE initially enters a cell, the UE performs initial cell search involving synchronization with a BS in step S11. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S12.

Subsequently, to complete connection to the eNB, the UE may perform a random access procedure with the eNB (S13 to S16). In the random access procedure, the UE may transmit a preamble on a physical random access channel (PRACH) (S13) and may receive a PDCCH and a random access response (RAR) for the preamble on a PDSCH associated with the PDCCH (S14). The UE may transmit a physical uplink shared channel (PUSCH) by using scheduling information in the RAR (S15), and perform a contention resolution procedure including reception of a PDCCH signal and a PDSCH signal corresponding to the PDCCH signal (S16).

Aside from the above 4-step random access procedure (4-step RACH procedure or type-1 random access procedure), when the random access procedure is performed in two steps (2-step RACH procedure or type-2 random access procedure), steps S13 and S15 may be performed as one UE transmission operation (e.g., an operation of transmitting message A (MsgA) including a PRACH preamble and/or a PUSCH), and steps S14 and S16 may be performed as one BS transmission operation (e.g., an operation of transmitting message B (MsgB) including an RAR and/or contention resolution information)

After the above procedure, the UE may receive a PDCCH and/or a PDSCH from the BS (S17) and transmit a PUSCH and/or a physical uplink control channel (PUCCH) to the BS (S18), in a general UL/DL signal transmission procedure.

Control information that the UE transmits to the BS is generically called uplink control information (UCI). The UCI includes a hybrid automatic repeat and request acknowledgement/negative acknowledgement (HARQ-ACK/NACK), a scheduling request (SR), a channel quality indicator (CQI), a precoding matrix index (PMI), a rank indicator (RI), etc.

In general, UCI is transmitted periodically on a PUCCH. However, if control information and traffic data should be transmitted simultaneously, the control information and traffic data may be transmitted on a PUSCH. In addition, the UCI may be transmitted aperiodically on the PUSCH, upon receipt of a request/command from a network.

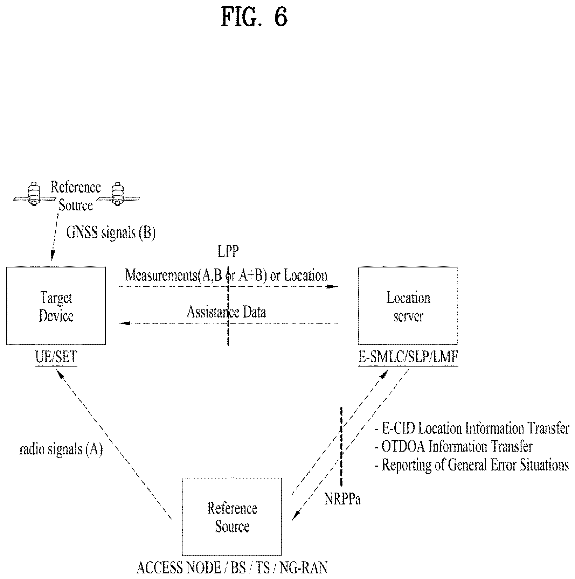

FIG. 6 is a diagram illustrating an exemplary positioning protocol configuration for positioning a UE, to which the embodiment is applicable.

Referring to FIG. 6, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.
- Reporting of General Error Situations. This function allows reporting of general error situations, for which function-specific error messages have not been defined.

PRS (positioning reference signal)

For such positioning, a positioning reference signal (PRS) may be used. The PRS is a reference signal used to estimate the position of the UE.

A positioning frequency layer may include one or more PRS resource sets, each including one or more PRS resources.

Sequence generation

A PRS sequence $r(m)$ ($m$ = 0, 1, ...) may be defined by Equation 1.

[Equation 1]

$$r(m) = \tfrac{1}{\sqrt{2}}\big(1 - 2c(m)\big) + j\tfrac{1}{\sqrt{2}}\big(1 - 2c(m+1)\big)$$

In Equation 1, c(i) may be a pseudo-random sequence. A pseudo-random sequence generator may be initialized by Equation 2.

[Equation 2]

$$c_{\text{init}} = \left( 2^{22} \left\lfloor \frac{n_{\text{ID,seq}}^{\text{PRS}}}{1024} \right\rfloor + 2^{10} \left( N_{\text{symb}}^{\text{slot}} n_{\text{s,f}}^{\mu} + l + 1 \right) \left( 2 \left( n_{\text{ID,seq}}^{\text{PRS}} \bmod 1024 \right) + 1 \right) \right.$$

$$\left. + \left( n_{\text{ID,seq}}^{\text{PRS}} \bmod 1024 \right) \right) \bmod 2^{31}$$

$n_{\text{s,f}}^{\mu}$ may be a slot number in a frame in an SCS configuration μ. A DL PRS sequence ID $n_{\text{ID,seq}}^{\text{PRS}} \in \{0, 1, \ldots, 4095\}$ may be given by a higher-layer parameter (e.g., DL-PRS-SequenceId). l may be an OFDM symbol in a slot to which the sequence is mapped.

Mapping to physical resources in a DL PRS resource

A PRS sequence $r(m)$ may be scaled by $\beta_{\text{PRS}}$ and mapped to REs $(k, l)_{p,\mu}$, specifically by Equation 3. $(k, l)_{p,\mu}$ may represent an RE $(k, l)$ for an antenna port p and the SCS configuration μ.

[Equation 3]

$$a_{k,l}^{(p,\mu)} = \beta_{\text{PRS}} \, r(m)$$

$$m = 0, 1, \ldots$$

$$k = m K_{\text{comb}}^{\text{PRS}} + \left( \left( k_{\text{offset}}^{\text{PRS}} + k' \right) \bmod K_{\text{comb}}^{\text{PRS}} \right)$$

$$l = l_{\text{start}}^{\text{PRS}}, l_{\text{start}}^{\text{PRS}} + 1, \ldots, l_{\text{start}}^{\text{PRS}} + L_{\text{PRS}} - 1$$

Herein, the following conditions may have to be satisfied:

- The REs $(k, l)_{p,\mu}$ are included in an RB occupied by a DL PRS resource configured for the UE;
- The symbol l not used by any SS/PBCH block used by a serving cell for a DL PRS transmitted from the serving cell or indicated by a higher-layer parameter SSB-positionInBurst for a DL PRS transmitted from a non-serving cell;
- A slot number satisfies the following PRS resource set-related condition;

$l_{\text{start}}^{\text{PRS}}$ is the first symbol of the DL PRS in the slot, which may be given by a higher-layer parameter DL-PRS-ResourceSymbolOffset. The time-domain size of the DL PRS resource, $L_{\text{PRS}} \in \{2, 4, 6, 12\}$ may be given by a higher-layer parameter DL-PRS-NumSymbols. A comb size $K_{\text{comb}}^{\text{PRS}} \in \{2, 4, 6, 12\}$ may be given by a higher-layer parameter transmissionComb. A combination $\{L_{\text{PRS}}, K_{\text{comb}}^{\text{PRS}}\}$ of $L_{\text{PRS}}$ and $K_{\text{comb}}^{\text{PRS}}$ may be one of {2, 2}, {4, 2}, {6, 2}, {12, 2}, {4, 4}, {12, 4}, {6, 6}, {12, 6} and/or {12, 12}. An RE offset $k_{\text{offset}}^{\text{PRS}} \in \{0, 1, \ldots, K_{\text{comb}}^{\text{PRS}} - 1\}$ may be given by combOffset. A frequency offset $k'$ may be a function of $l - l_{\text{start}}^{\text{PRS}}$ as shown in Table 5.

[Table 5]

| $K_{\text{comb}}^{\text{PRS}}$ | Symbol number within the downlink PRS resource $l - l_{\text{start}}^{\text{PRS}}$ | | | | | | | | | | | |
|---|---|---|---|---|---|---|---|---|---|---|---|---|
| | **0** | **1** | **2** | **3** | **4** | **5** | **6** | **7** | **8** | **9** | **10** | **11** |
| 2 | 0 | 1 | 0 | 1 | 0 | 1 | 0 | 1 | 0 | 1 | 0 | 1 |
| 4 | 0 | 2 | 1 | 3 | 0 | 2 | 1 | 3 | 0 | 2 | 1 | 3 |
| 6 | 0 | 3 | 1 | 4 | 2 | 5 | 0 | 3 | 1 | 4 | 2 | 5 |
| 12 | 0 | 6 | 3 | 9 | 1 | 7 | 4 | 10 | 2 | 8 | 5 | 11 |

A reference point for k=0 may be the position of point A in a positioning frequency layer in which the DL PRS resource is configured. Point A may be given by a higher-layer parameter dl-PRS-PointA-r16.

Mapping to slots in a DL PRS resource set

A DL PRS resource included in a DL PRS resource set may be transmitted in a slot and a frame which satisfy the following Equation 4.

[Equation 4]

$$\left(N_{\text{slot}}^{\text{frame},\mu} n_{\text{f}} + n_{\text{s,f}}^{\mu} - T_{\text{offset}}^{\text{PRS}} - T_{\text{offset,res}}^{\text{PRS}}\right) \bmod 2^{\mu} T_{\text{per}}^{\text{PRS}} \in \left\{i T_{\text{gap}}^{\text{PRS}}\right\}_{i=0}^{T_{\text{rep}}^{\text{PRS}}-1}$$

$N_{\text{slot}}^{\text{frame},\mu}$ may be the number of slots per frame in the SCS configuration μ. $n_{\text{f}}$ may be a system frame number (SFN). $n_{\text{s,f}}^{\mu}$ may be a slot number in a frame in the SCS configuration μ. A slot offset $T_{\text{offset}}^{\text{PRS}} \in \left\{0, 1, \dots, T_{\text{per}}^{\text{PRS}} - 1\right\}$ may be given by a higher-layer parameter *DL-PRS-ResourceSetSlotOffset*. A DL PRS resource slot offset $T_{\text{offset,res}}^{\text{PRS}}$ may be given by a higher layer parameter *DL-PRS-ResourceSlotOffset*. A periodicity $T_{\text{per}}^{\text{PRS}} \in \{4, 5, 8, 10, 16, 20, 32, 40, 64, 80, 160, 320, 640, 1280, 2560, 5120, 10240\}$ may be given by a higher-layer parameter *DL-PRS-Periodicity*. A repetition factor $T_{\text{rep}}^{\text{PRS}} \in \{1, 2, 4, 6, 8, 16, 32\}$ may be given by a higher-layer parameter DL-PRS-ResourceRepetitionFactor. A muting repetition factor $T_{\text{muting}}^{\text{PRS}}$ may be given by a higher-layer parameter *DL-PRS-MutingBitRepetitionFactor*. A time gap $T_{\text{gap}}^{\text{PRS}} \in \{1, 2, 4, 8, 16, 32\}$ may be given by a higher-layer parameter *DL-PRS-ResourceTimeGap*.

The PRS reception procedure of a terminal in an NR system to which various embodiments of the present disclosure are applicable may be based on Table 6 below.

[Table 6]

5.1.6.5 PRS reception procedure

The UE can be configured with one or more DL PRS resource set configuration(s) as indicated by the higher layer parameters DL-PRS-ResourceSet and DL-PRS-Resource.

Each DL PRS resource set consists of K≥1 DL PRS resource(s) where each has an associated spatial transmission filter. The UE can be configured with one or more DL PRS Positioning Frequency Layer configuration(s) as indicated by the higher layer parameter DL-PRS-PositioningFrequencyLayer. A DL PRS Positioning Frequency Layer is defined as a collection of DL PRS Resource Sets which have common parameters configured by DL-PRS-PositioningFrequencyLayer.

The UE assumes that the following parameters for each DL PRS resource(s) are configured via higher layer parameters DL-PRS-PositioningFrequencyLayer, DL-PRS-ResourceSet and DL-PRS-Resource.

A positioning frequency layer consists of one or more PRS resource sets and it is defined by:

- DL-PRS-SubcarrierSpacing defines the subcarrier spacing for the DL PRS resource. All DL PRS Resources and DL PRS Resource sets in the same DL-PRS-PositioningFrequencyLayer have the same value of DL-PRS-SubcarrierSpacing. The supported values of DL-PRS-SubcarrierSpacing are given in Table 4.2-1 of [4, TS38.211].

- DL-PRS-CyclicPrefix defines the cyclic prefix for the DL PRS resource. All DL PRS Resources and DL PRS Resource sets in the same DL-PRS-PositioningFrequencyLayer have the same value of DL-PRS-CyclicPrefix. The supported values of DL-PRS-CyclicPrefix are given in Table 4.2-1 of [4, TS38.211].

- DL-PRS-PointA defines the absolute frequency of the reference resource block. Its lowest subcarrier is also known as Point A. All DL PRS resources belonging to the same DL PRS Resource Set have common Point A and all DL PRS Resources sets belonging to the same DL-PRS-PositioningFrequencyLayer have a common Point A. The UE expects that it will be configured with [IDs] each of which is defined such that it is associated with multiple DL PRS Resource Sets from the same cell. The UE expects that one of these [IDs] along with a DL-PRS-ResourceSetId and a DL-PRS-ResourceId can be used to uniquely identify a DL PRS Resource.

---

A PRS resource set consists of one or more PRS resources and it is defined by:

- DL-PRS-ResourceSetId defines the identity of the DL PRS resource set configuration.

- DL-PRS-Periodicity defines the DL PRS resource periodicity and takes values $T_{\text{per}}^{\text{PRS}} \in$ $2^\mu$ {4, 8, 16, 32, 64, 5, 10, 20, 40, 80, 160, 320, 640, 1280, 2560, 5120, 10240, 20480} slots, where $\mu$ = 0, 1, 2, 3 for DL-PRS-SubcarrierSpacing=15, 30, 60 and 120kHz respectively. $T_{\text{per}}^{\text{PRS}} = 2^\mu \cdot 20480$ is not supported for $\mu$ = 0. All the DL PRS resources within one resource set are configured with the same periodicity.

- DL-PRS-ResourceRepetitionFactor defines how many times each DL-PRS resource is repeated for a single instance of the DL-PRS resource set and takes values $T_{\text{rep}}^{\text{PRS}} \in$ {1,2,4,6,8,16,32},. All the DL PRS resources within one resource set have the same ResourceRepetitionFactor

- DL-PRS-ResourceTimeGap defines the offset in number of slots between two repeated instances of a DL PRS resource with the same DL-PRS-ResourceID within a single instance of the DL PRS resource set and takes values $T_{\text{gap}}^{\text{PRS}} \in \{1,2,4,8,16,32\}$. The UE only expects to be configured with DL-PRS-ResourceTimeGap if DL-PRS-ResourceRepetitionFactor is configured with value greater than 1. The time duration spanned by one instance of a DL-PRS-ResourceSet is not expected to exceed the configured value of DL-PRS-Periodicity. All the DL PRS resources within one resource set have the same DL-PRS-ResourceTimeGap.

- DL-PRS-MutingPattern defines a bitmap of the time locations where the DL PRS resource is expected to not be transmitted for a DL PRS resource set. The bitmap size can be {2, 4, 8, 16, 32} bits long. The bitmap has two options for applicability. In the first option each bit in the bitmap corresponds to a configurable number of consecutive instances of a DL-PRS-ResourceSet where all the DL-PRS-Resources within the set are muted for the instance that is indicated to be muted. In the second option each bit in the bitmap corresponds to a single repetition index for each of the DL-PRS-Resources within each instance of a DL-PRS-ResourceSet and the length of the bitmap is equal to DL-PRS-ResourceRepetitionFactor. Both options may be configured at the same time in which case the logical AND operation is applied to the bit maps as described in clause 7.4.1.7.4 of [4, TS 38.211].

---

in a higher layer parameter DL-PRS-RstdReferenceInfo. The reference time indicated by the network to the UE can also be used by the UE to determine how to apply higher layer parameters DL-PRS-expectedRSTD and DL-PRS-expectedRSTD-uncertainty. The UE expects the reference time to be indicated whenever it is expected to receive the DL PRS.

This reference time provided by DL-PRS-RstdReferenceInfo may include an [ID], a PRS resource set ID, and optionally a single PRS resource ID or a list of PRS resource IDs. The UE may use different DL PRS resources or a different DL PRS resource set to determine the reference time for the RSTD measurement as long as the condition that the DL PRS resources used belong to a single DL PRS resource set is met. If the UE chooses to use a different reference time than indicated by the network, then it is expected to report the DL PRS resource ID(s) or the DL PRS resource set ID used to determine the reference.

The UE may be configured to report quality metrics corresponding to the RSTD and UE Rx-Tx time difference measurements which include the following fields:

- TimingMeasQuality-Value which provides the best estimate of the uncertainty of the measurement

(continued)

- TimingMeasQuality-Resolution which specifies the resolution levels used in the Value field

The UE expects to be configured with higher layer parameter DL-PRS-expectedRSTD, which defines the time difference with respect to the received DL subframe timing the UE is expected to receive DL PRS, and DL-PRS-expectedRSTD-uncertainty, which defines a search window around the expectedRSTD.

For DL UE positioning measurement reporting in higher layer parameters DL-PRS-RstdMeasurementInfo or DL-PRS-UE-Rx-Tx-MeasurementInfo the UE can be configured to report the DL PRS resource ID(s) or the DL PRS resource set ID(s) associated with the DL PRS resource(s) or the DL PRS resource set(s) which are used in determining the UE measurements DL RSTD, UE Tx-Rx time difference or the DL PRS-RSRP.

The UE can be configured in higher layer parameter UE Rx-Tx Time-MeasRequestInfo to report multiple UE Rx-Tx time difference measurements corresponding to a single configured SRS resource or resource set for positioning. Each measurement corresponds to a single received DL PRS resource or resource set which can be in difference positioning frequency layers.

---

For the DL RSTD, DL PRS-RSRP, and UE Rx-Tx time difference measurements the UE can report an associated higher layer parameter Timestamp. The Timestamp can include the SFN and the slot number for a subcarrier spacing. These values correspond to the reference which is provided by DL-PRS-RSTDReferenceInfo.

The UE is expected to measure the DL PRS resource outside the active DL BWP or with a numerology different from the numerology of the active DL BWP if the measurement is made during a configured measurement gap. When not configured with a measurement gap, the UE is only required to measure DL PRS within the active DL BWP and with the same numerology as the active DL BWP. If the UE is not provided with a measurement gap, the UE is not expected to process DL PRS resources on serving or non-serving cells on any symbols indicated as UL by the serving cell. When the UE is expected to measure the DL PRS resource outside the active DL BWP it may request a measurement gap in higher layer parameter [XYZ].

The UE assumes that for the serving cell the DL PRS is not mapped to any symbol that contains SS/PBCH. If the time frequency location of the SS/PBCH block transmissions from non-serving cells are provided to the UE then the UE also assumes that the DL PRS is not mapped to any symbol that contains the SS/PBCH block of the non-serving cell. The UE may be configured to report, subject to UE capability, up to 4 DL RSTD measurements per pair of cells with each measurement between a different pair of DL PRS resources or DL PRS resource sets within the DL PRS configured for those cells. The up to 4 measurements being performed on the same pair of cells and all DL RSTD measurements in the same report use a single reference timing.

The UE may be configured to measure and report up to 8 DL PRS RSRP measurements on different DL PRS resources from the same cell. When the UE reports DL PRS RSRP measurements from one DL PRS resource set, the UE may indicate which DL PRS RSRP measurements have been performed using the same spatial domain filter for reception.

If the UE is configured with DL-PRS-QCL-Info and the QCL relation is between two DL PRS resources, then the UE assumes those DL PRS resources are from the same cell. If DL-PRS-QCL-Info is configured to the UE with 'QCL-Type-D' with a source DL-PRS-Resource then the DL-PRS-ResourceSetId and the DL-PRS-ResrouceId of the source DL-PRS-Resource are expected to be indicated to the UE.

The UE does not expect to process the DL PRS in the same symbol where other DL signals and channels are transmitted to the UE when there is no measurement gap configured to the UE.

---

UE Positioning Architecture

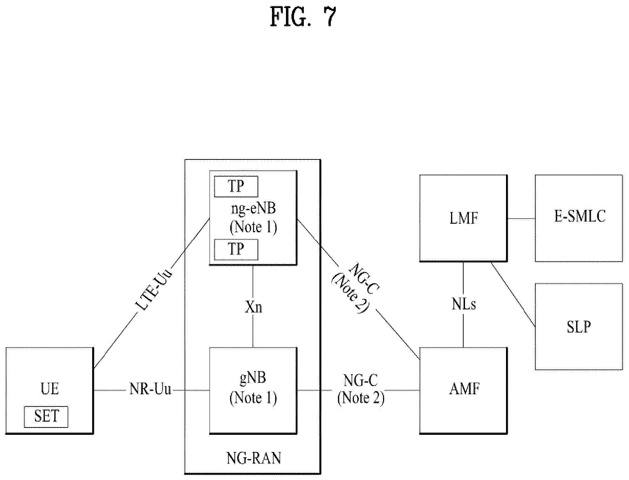

FIG. 7 illustrates an exemplary system architecture for measuring positioning of a UE to which the embodiment is applicable.

Referring to FIG. 7, an AMF may receive a request for a location service associated with a particular target UE from another entity such as a gateway mobile location center (GMLC) or the AMF itself decides to initiate the location service on behalf of the particular target UE. Then, the AMF transmits a request for a location service to a location management function (LMF). Upon receiving the request for the location service, the LMF may process the request for the location service and then returns the processing result including the estimated position of the UE to the AMF. In the case of a location service requested by an entity such as the GMLC other than the AMF, the AMF may transmit the processing result received from the LMF to this entity.

A new generation evolved-NB (ng-eNB) and a gNB are network elements of the NG-RAN capable of providing a measurement result for positioning. The ng-eNB and the gNB may measure radio signals for a target UE and transmits a measurement result value to the LMF. The ng-eNB may control several TPs, such as remote radio heads, or PRS-only TPs for support of a PRS-based beacon system for E-UTRA.

The LMF is connected to an enhanced serving mobile location center (E-SMLC) which may enable the LMF to access the E-UTRAN. For example, the E-SMLC may enable the LMF to support OTDOA, which is one of positioning methods of the E-UTRAN, using DL measurement obtained by a target UE through signals transmitted by eNBs and/or PRS-only TPs in the E-UTRAN.

The LMF may be connected to an SUPL location platform (SLP). The LMF may support and manage different location services for target UEs. The LMF may interact with a serving ng-eNB or a serving gNB for a target UE in order to obtain position measurement for the UE. For positioning of the target UE, the LMF may determine positioning methods, based on a location service (LCS) client type, required quality of service (QoS), UE positioning capabilities, gNB positioning capabilities, and ng-eNB positioning capabilities, and then apply these positioning methods to the serving gNB and/or serving ng-eNB. The LMF may determine additional information such as accuracy of the location estimate and velocity of the target UE. The SLP is a secure user plane location (SUPL) entity responsible for positioning over a user plane.

The UE may measure the position thereof using DL RSs transmitted by the NG-RAN and the E-UTRAN. The DL RSs transmitted by the NG-RAN and the E-UTRAN to the UE may include a SS/PBCH block, a CSI-RS, and/or a PRS. Which DL RS is used to measure the position of the UE may conform to configuration of LMF/E-SMLC/ng-eNB/E-UTRAN etc. The position of the UE may be measured by an RAT-independent scheme using different global navigation satellite systems (GNSSs), terrestrial beacon systems (TBSs), WLAN access points, Bluetooth beacons, and sensors (e.g., barometric sensors) installed in the UE. The UE may also contain LCS applications or access an LCS application through communication with a network accessed thereby or through another application contained therein. The LCS application may include measurement and calculation functions needed to determine the position of the UE. For example, the UE may contain an independent positioning function such as a global positioning system (GPS) and report the position thereof, independent of NG-RAN transmission. Such independently obtained positioning information may be used as assistance information of positioning information obtained from the network.

Operation for UE Positioning

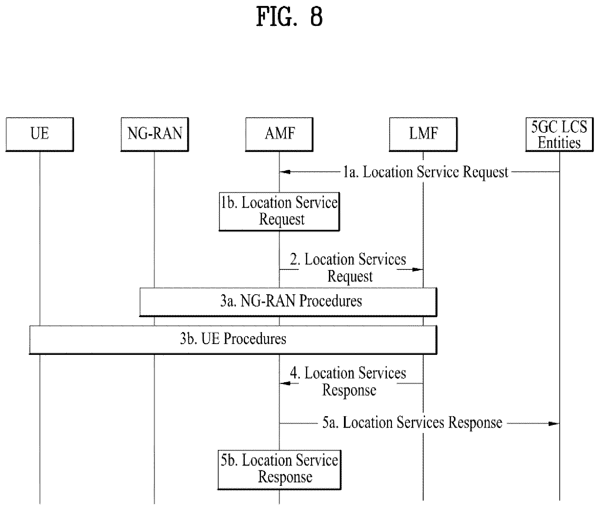

FIG. 8 illustrates an implementation example of a network for UE positioning.

When an AMF receives a request for a location service in the case in which the UE is in connection management (CM)-IDLE state, the AMF may make a request for a network triggered service in order to establish a signaling connection with the UE and to assign a specific serving gNB or ng-eNB. This operation procedure is omitted in FIG. 8. In other words, in FIG. 8 it may be assumed that the UE is in a connected mode. However, the signaling connection may be released by an NG-RAN as a result of signaling and data inactivity while a positioning procedure is still ongoing.

An operation procedure of the network for UE positioning will now be described in detail with reference to FIG. 8. In step 1a, a 5GC entity such as GMLC may transmit a request for a location service for measuring the position of a target UE to a serving AMF. Here, even when the GMLC does not make the request for the location service, the serving AMF may determine the need for the location service for measuring the position of the target UE according to step 1b. For example, the serving AMF may determine that itself will perform the location service in order to measure the position of the UE for an emergency call.

In step 2, the AMF transfers the request for the location service to an LMF. In step 3a, the LMF may initiate location procedures with a serving ng-eNB or a serving gNB to obtain location measurement data or location measurement assistance data. For example, the LMF may transmit a request for location related information associated with one or more UEs to the NG-RAN and indicate the type of necessary location information and associated QoS. Then, the NG-RAN may transfer the location related information to the LMF in response to the request. In this case, when a location determination method according to the request is an enhanced cell ID (E-CID) scheme, the NG-RAN may transfer additional location related information to the LMF in one or more NR positioning protocol A (NRPPa) messages. Here, the "location related information" may mean all values used for location calculation such as actual location estimate information and radio measurement or location measurement. Protocol used in step 3a may be an NRPPa protocol which will be described later.

Additionally, in step 3b, the LMF may initiate a location procedure for DL positioning together with the UE. For example, the LMF may transmit the location assistance data to the UE or obtain a location estimate or location measurement value. For example, in step 3b, a capability information transfer procedure may be performed. Specifically, the LMF may transmit a request for capability information to the UE and the UE may transmit the capability information to the LMF. Here, the capability information may include information about a positioning method supportable by the LFM or the UE, information about various aspects of a particular positioning method, such as various types of assistance data for an A-GNSS, and information about common features not specific to any one positioning method, such as ability to handle multiple LPP transactions. In some cases, the UE may provide the capability information to the LMF although the LMF does not transmit a request for the capability information.

As another example, in step 3b, a location assistance data transfer procedure may be performed. Specifically, the UE may transmit a request for the location assistance data to the LMF and indicate particular location assistance data needed to the LMF. Then, the LMF may transfer corresponding location assistance data to the UE and transfer additional assistance data to the UE in one or more additional LTE positioning protocol (LPP) messages. The location assistance data delivered from the LMF to the UE may be transmitted in a unicast manner. In some cases, the LMF may transfer the location assistance data and/or the additional assistance data to the UE without receiving a request for the assistance data from the UE.

As another example, in step 3b, a location information transfer procedure may be performed. Specifically, the LMF may send a request for the location (related) information associated with the UE to the UE and indicate the type of necessary location information and associated QoS. In response to the request, the UE may transfer the location related information to the LMF. Additionally, the UE may transfer additional location related information to the LMF in one or more LPP messages. Here, the "location related information" may mean all values used for location calculation such as actual location estimate information and radio measurement or location measurement. Typically, the location related information may be a reference signal time difference (RSTD) value measured by the UE based on DL RSs transmitted to the UE by a plurality of NG-RANs and/or E-UTRANs. Similarly to the above description, the UE may transfer the location related information to the LMF without receiving a request from the LMF.

The procedures implemented in step 3b may be performed independently but may be performed consecutively. Generally, although step 3b is performed in order of the capability information transfer procedure, the location assistance data transfer procedure, and the location information transfer procedure, step 3b is not limited to such order. In other words, step 3b is not required to occur in specific order in order to improve flexibility in positioning. For example, the UE may request the location assistance data at any time in order to perform a previous request for location measurement made by the LMF. The LMF may also request location information, such as a location measurement value or a location estimate value, at any time, in the case in which location information transmitted by the UE does not satisfy required QoS. Similarly, when the UE does not perform measurement for location estimation, the UE may transmit the capability information to the LMF at any time.

In step 3b, when information or requests exchanged between the LMF and the UE are erroneous, an error message may be transmitted and received and an abort message for aborting positioning may be transmitted and received.

Protocol used in step 3b may be an LPP protocol which will be described later.

Step 3b may be performed additionally after step 3a but may be performed instead of step 3a.

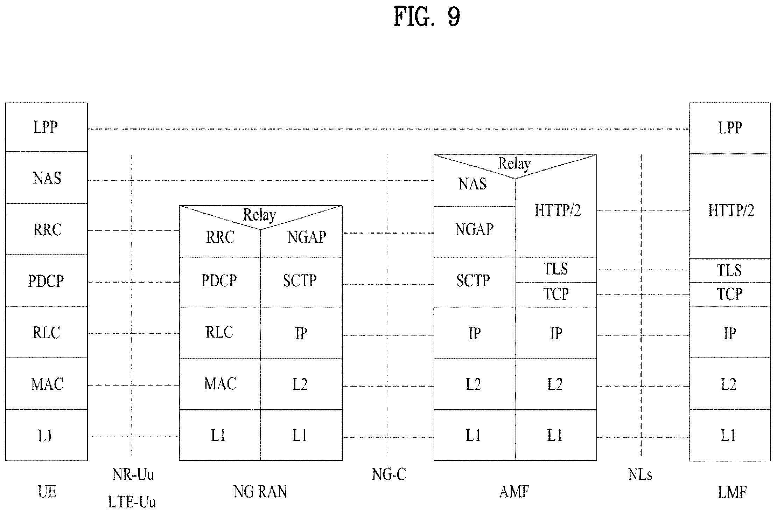

In step 4, the LMF may provide a location service response to the AMF. The location service response may include information as to whether UE positioning is successful and include a location estimate value of the UE. If the procedure of FIG. 8 has been initiated by step 1a, the AMF may transfer the location service response to a 5GC entity such as a GMLC. If the procedure of FIG. 9 has been initiated by step 1b, the AMF may use the location service response in order to provide a location service related to an emergency call.

Positioning Protocol

LTE Positioning Protocol (LPP)

FIG. 9 illustrates an exemplary protocol layer used to support LPP message transfer between an LMF and a UE. An LPP protocol data unit (PDU) may be carried in a NAS PDU between an AMF and the UE.

Referring to FIG. 9, LPP is terminated between a target device (e.g., a UE in a control plane or an SUPL enabled terminal (SET) in a user plane) and a location server (e.g., an LMF in the control plane or an SLP in the user plane). LPP messages may be carried as transparent PDUs cross intermediate network interfaces using appropriate protocols, such an NGAP over an NG-C interface and NAS/RRC over LTE-Uu and NR-Uu interfaces. LPP is intended to enable positioning for NR and LTE using various positioning methods.

For example, a target device and a location server may exchange, through LPP, capability information therebetween, assistance data for positioning, and/or location information. The target device and the location server may exchange error information and/or indicate abort of an LPP procedure, through an LPP message.

NR Positioning Protocol A (NRPPa)

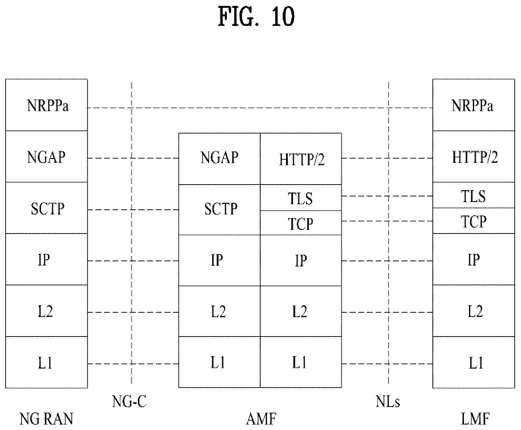

FIG. 10 illustrates an exemplary protocol layer used to support NRPPa PDU transfer between an LMF and an NG-RAN node.

NRPPa may be used to carry information between an NG-RAN node and an LMF. Specifically, NRPPa may carry an E-CID for measurement transferred from an ng-eNB to an LMF, data for support of an OTDOA positioning method, and a cell-ID and a cell position ID for support of an NR cell ID positioning method. An AMF may route NRPPa PDUs based on a routing ID of an involved LMF over an NG-C interface without information about related NRPPa transaction.

An NRPPa procedure for location and data collection may be divided into two types. The first type is a UE associated procedure for transfer of information about a particular UE (e.g., location measurement information) and the second type is a non-UE-associated procedure for transfer of information applicable to an NG-RAN node and associated TPs (e.g., gNB/ng-eNB/TP timing information). The two types may be supported independently or may be supported simultaneously.

Positioning Measurement Method

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

OTDOA (Observed Time Difference of Arrival)

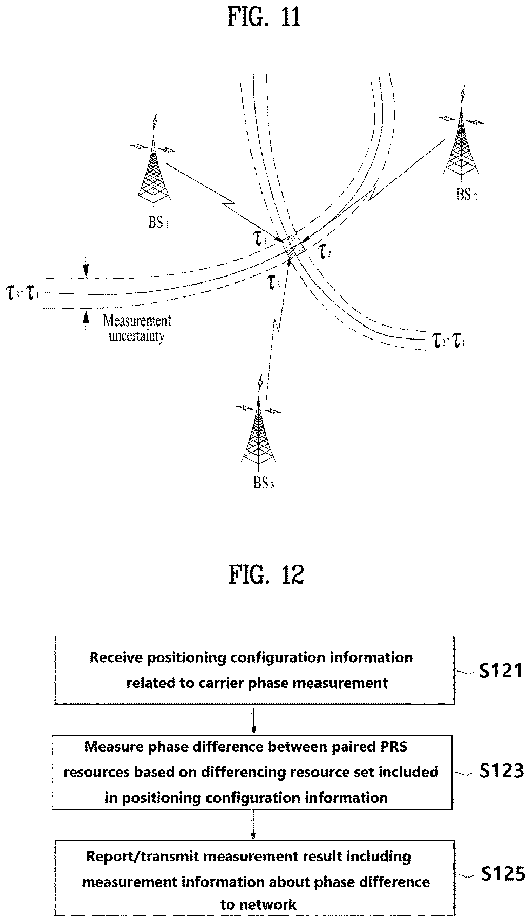

FIG. 11 is a diagram illustrating an observed time difference of arrival (OTDOA) positioning method, to which the embodiment is applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 5 below.

[Equation 5]

$$RSTDi_{,1} = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

In Equation 5, c is the speed of light, $\{x_t, y_t\}$ are (unknown) coordinates of a target UE, $\{x_i, y_i\}$ are (known) coordinates of a TP, and $\{x_1, y_1\}$ are coordinates of a reference TP (or another TP). Here, $(T_i - T_1)$ is a transmission time offset between two TPs, referred to as "real time differences" (RTDs), and $n_i$ and $n_1$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

- UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io
- E-UTRAN measurement: ng-eNB Rx-Tx time difference, timing advance (TADV), and/or AoA

Here, TADV may be divided into Type 1 and Type 2 as follows.

$$\text{T}_{\text{ADV}} \text{ Type 1} = (\text{ng-eNB Rx-Tx time difference}) + (\text{UE E-UTRA Rx-Tx time difference})$$

$$\text{TADV Type 2} = \text{ng-eNB Rx-Tx time difference}$$

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

**CPM (Carrier Phase Measurement)**

Carrier phase measurement (CPM) is one of the position estimation algorithms used in the GPS/GNSS. In brief, the CPM is a scheme of estimating the distance between a transmitter and receiver by measuring the phase of a received transmission signal and determining the position based on the estimated distance. In other words, the position of the user may be measured by calculating the distance to each of the multiple satellites based on signals received from the multiple satellites. In this case, it is assumed that there is a Line of Sight (LoS) between the satellite and the user, and based on this assumption, the time difference between the transmitter and receiver may be translated into the distance between the transmitter and receiver. Meanwhile, satellite channels may experience multi-path and delays due to the ionosphere, but the multi-path and delays caused by the ionosphere may be mitigated through modeling.

Table 7 below shows the matters discussed in relation to (3GPP) CPM in a specific scenario.

[Table 7]

| Justification |
|---|
| Regarding higher accuracy, two promising techniques identified in earlier studies will be considered in Rel-18: one is to take the advantage of the rich 5G spectrum to increase the bandwidth for the transmission and reception of the positioning reference signals based on PRS/SRS bandwidth aggregation for intra-band carriers, and the other is to use the NR carrier phase measurements. GNSS carrier phase positioning has been used very successfully for centimetre-level positioning but is limited to outdoor applications. NR carrier phase positioning has the potential for significant performance improvements for indoor and outdoor deployments in comparison with the existing NR positioning methods, as well as shorter latency and lower UE power consumption in comparison with RTK-GNSS outdoors. |
| **Objective** |
| • Improved accuracy, integrity, and power efficiency:<br>   o Study solutions for Integrity for RAT dependent positioning techniques [RAN2, RAN1]:<br>      ■ Identify the error sources, [RAN1, RAN2].<br>      ■ Study methodologies, procedures, signalling, etc for determination of positioning integrity for both UE-based and UE-assisted positioning [RAN2] |

(continued)

| Objective |
| --- |
| ▪ Focus on reuse of concepts and principles being developed for RAT-Independent GNSS positioning integrity, where possible.<br>o Study solutions for accuracy improvement based on PRS/SRS bandwidth aggregation for intra-band carriers considering e.g. timing errors, phase coherency, frequency errors, power imbalance, etc [RAN4]:<br>o Study solutions for accuracy improvement based on NR carrier phase measurements [RAN1, RAN4]<br>▪ Reference signals, physical layer measurements, physical layer procedures to enable positioning based on NR carrier phase measurements for both UE-based and UE-assisted positioning [RAN1]<br>▪ Focus on reuse of existing PRS and SRS, with new reference signals only considered if found necessary<br>o Study the requirements on LPHAP as developed by SA1 and evaluate whether existing RAN functionality can support these power consumption and positioning requirements. Based on the evaluation, and, if found beneficial, study potential enhancements to help address any limitations [RAN2, RAN1]<br>▪ Study is limited to a single representati LPHAP<br>▪ ve use case (use case 6 as defined TS 22.104). The choice of selected use case can be reviewed at the start of the study.<br>Study is limited to enhancements to RRC_INACTIVE and/or RRC_IDLE state |

The aforementioned CPM may be compared to code phase measurement. While the code phase measurement is commonly used, in GPS/GNSS-related positioning, the actual phase of a carrier may be directly measured. Typically, the CPM provides higher accuracy than the code phase measurement because the CPM directly measures the phase within a cycle corresponding to the carrier frequency. Meanwhile, the CPM and code phase measurement may be performed based on similar or identical algorithms or methods.

In the CPM, the following fundamental positioning principle may be used: the transmitter transmits a predetermined signal at a specific time, and the receiver measures the exact reception time at the carrier phase level (i.e., within the cycle of the carrier frequency). In this case, the distance between the transmitter and receiver may be measured very accurately based on the CPM. To use such a method, the distance is typically converted into a phase, and a pseudo-range equation may be derived based on the conversion. As CPM positioning based on the pseudo-range equation, positioning based on GNSS/GPS may be performed by applying Equation 6 below.

[Equation 6]

$$\mathrm{p} = \rho + d_p + c(dt - dT) + d_{ion} + d_{trop} + e_{mp} + e_p$$

In Equation 6, p denotes pseudo-range measurement, $\rho$ denotes the true range, $d_p$ denotes satellite orbital errors, c denotes the speed of light, $dt$ denotes the satellite clock offset from GPS time, $dT$ denotes the receiver clock offset from GPS time, $d_{ion}$ denotes the ionospheric delay, $d_{trop}$ denotes the tropospheric delay, $e_{mp}$ denotes the multi-path effect, and $e_p$ denotes the receiver noise.

These terms may be considered in the GPS/GNSS, and there are techniques to mitigate or remove each term. Additionally, although it is not explicitly represented in Equation 6, the carrier phase information that the user may estimate is within a range of $[0, 2\pi]$. For distances exceeding the range, a separate estimation method is needed. In other words, when the actual distance between the user and the satellite is converted into a phase, the receiver needs to estimate the distance corresponding to an integer multiple of the frequency cycle through a separate estimation method (integer ambiguity resolution).

**Differencing**

CPM has very high positioning accuracy at the cm-level, and one of the technologies that can achieve this is differencing. Here, differencing can be an algorithm that assumes that there is a clock error in the transmitter and/or receiver, and removes the assumed clock error. A method for removing the clock error of the transmitter (or, satellite) can be as follows.

The signal transmitted at time t1 from the transmitter may include a clock error of the transmitter. The signal transmitted from the transmitter may be received at different receivers, and a common transmitter clock error may be included among the signals received at different receivers. In this case, if the difference between the signals received at each receiver is calculated, the clock error of the transmitter can be effectively removed. This method of removing clock errors may be defined as Rx differencing.

Similarly, the removal of the clock error of the receiver can be accomplished. For example, two signals can be transmitted from temporally/spatially different transmitters. One receiver can receive two signals transmitted from the different transmitters. In this case, a common receiver clock error can be included between the two reception signals, and the clock error of the receiver can be effectively removed by finding the difference in reception time between the two reception signals. In this way, the method of removing the clock error can be defined as Tx differencing.

Typically, CPM in GPS/GNSS targets very high accuracy (cm level), so the clock error of the transmitter and receiver above becomes a major obstacle to achieving the target accuracy. Therefore, the Tx differencing and Rx differencing mentioned above can be performed, which can be defined as DD (double differencing).

Positioning using CPM in the GNSS/GPS may also consider the following factors. Specifically, a cycle slip may occur at the receiver, which may require reporting or correction therefor. The cycle slip may occur when the receiver is incapable of tracking a signal beyond a specific threshold (e.g., a half-cycle). When such a cycle slip occurs, the measurement of the corresponding epoch from the transmitter may become invalid. After the cycle slip, measurements may be reused, but the integer ambiguity needs to be re-estimated.

Additionally, the issue of position dilution (dilution of precision) may also arise. The position dilution means that even when positioning is performed based on the same number of transmitters and receivers and with the same signal-to-noise ratio (SNR), the accuracy of the positioning may vary depending on the relative positions (or distances) between the transmitter and receiver, which is often referred to as geometric dilution of precision (GDOP). For example, when a receiver calculates the position based on signals from N transmitters, the positioning accuracy of the receiver may be lower if the transmitters are closely grouped, compared to when the transmitters are more evenly distributed.

**Integer Ambiguity Resolution**

First, the following may be considered as solutions related to integer ambiguity resolution (refer to Lee, Hongkyu (2014). "An Instantaneous Integer Ambiguity Resolution for GPS Real-Time Structure Monitoring," Journal of Korean Society of Civil Engineers, Vol. 34, No. 1, pp. 342-353 (in Korean)).

In dynamic positioning using GPS carriers, centimeter-level accuracy may be achieved through precise determination of unknown integer ambiguity contained in observation data. To this end, ambiguity resolution, which is a mathematical procedure for converting ambiguous range observation data with uncertainty into a precise range with millimeter-level accuracy, is necessary. For GPS dynamic positioning, it is common to apply the integer-constrained least squares (Teunissen, 1994; Han et al., 1997; Verhagen, 2004).

However, when the receiver is moving, there is a limitation on observation data capable of being used in the mathematical model compared to when the receiver is stationary, resulting in lower estimation precision and higher correlation, which makes it difficult to quickly and accurately resolve the integer ambiguity (Teunissen, 1993; Lee et al., 2005). Therefore, in GPS dynamic positioning, it is common to use the on-the-fly (OTF) method, which extracts and accumulates only the integer ambiguity part of a normal equation. The time required for initializing the integer ambiguity may range from several seconds to several minutes, depending on the satellite geometry and residual errors (Hofmann-Wellenhof et al., 2001). This method depends on the previously determined integer ambiguity after initialization as long as there are no signal interruptions (cycle slips). In this method, when initialization is required, it is not possible to perform high-precision positioning during the initialization period. Additionally, recalculation of the integer ambiguity is required due to changes in the satellite geometry, and continuous monitoring for signal interruptions is necessary, which makes the algorithm inherently complex.

In the mid-1990s, with the emergence of dual-frequency receivers capable of observing a precise pseudo-range, instantaneous ambiguity resolution has been developed for baselines of around 10 km (Han et al., 1996). This method independently resolves the integer ambiguity for each epoch whenever the GPS receiver acquires both the carrier phase and precise pseudo-range. Since the method does not require additional algorithms for checking the signal interruption or satellite geometry, the method is suitable for GPS structural monitoring environments where such interruptions frequently occur due to the structure or passing vehicles. However, the performance of the instantaneous ambiguity resolution is significantly affected by the satellite geometry and residual errors. Particularly, when fewer than five satellites are observed or when multi-path effects become significant, the performance thereof degrades (Lee et al., 2004).

There are a variety of algorithms for performing integer ambiguity resolution, and one of the most well-known and effective methods is least squares ambiguity decorrelation adjustment (LAMBDA). To use the LAMBDA, the float estimate of the position, i.e., the positioning within the cycle should be separated from the integer ambiguity. Since the integer ambiguity is an integer rather than a floating point value, the obtained float solution is not the exact solution and may be further refined. The ellipsoid formed by the covariance of the integer ambiguity becomes extremely elongated in one direction, and as a result, searching within this space is inefficient. Therefore, the LAMBDA transforms the system with the elongated ellipsoid to a system closer to a sphere, which is more efficient than previous methods in searching for solutions to the integer ambiguity.

Another method for estimating integer ambiguity involves using both CPM and code phase measurement at each epoch. The downside of this method is that a time slew value is required to obtain the correlation between the CPM and code phase measurement, and GPS outputs at 1 Hz from the Novatel Superstar II. A brief summary thereof is that the measurement for a single epoch and the covariance of the integer ambiguity from the previous epoch are used. The reason for using the covariance from the previous epoch is that when the receiver maintains phase lock on the carrier phase, the integer ambiguity remains constant across the two epochs. In addition, there are other algorithms for estimating integer ambiguity such as algorithms based on the extended Kalman filter, and there are many variations.

## Carrier phase measurement in NR

The aforementioned CPM in the GPS/GNSS may be based on a single carrier. Specifically, in the CPM, the phase may be estimated based on the transmission and reception of sinusoidal signals, rather than in the code domain. The CPM between a satellite and user in the GPS/GNSS may be introduced to the gNB (or TRP) and UE in NR. In the introduction thereof to NR, there may be the following differences. Unless the sinusoidal signal is redefined as a reference signal, OFDM-based CPM should be performed. In other words, the OFDM-based CPM differs from GPS/GNSS-based CPM in that the OFDM-based CPM is performed on relatively wideband signals.

First, the current reference signal for positioning in NR is a PRS. If a sinusoidal signal is redefined based on the PRS, the sinusoidal signal may have the configuration characteristics of the PRS. That is, the bandwidth (BW) configuration for the sinusoidal signal may be more flexible. Additionally, the probability of having a LoS path between the BS (or TRP) and the user may be lower than the probability of having a LoS path between the satellite and the user. In other words, since the multi-path effects between the BS (or TRP) and the user are incapable of being ignored, the CPM in NR should also consider the effects of multi-path between the BS (or TRP) and the user. In the CPM in NR, non-line of sight (NLOS) elimination or LOS path estimation may be treated with greater importance from the perspective of algorithms. Additionally, compared to the GPS, NR typically has higher carrier frequencies, larger BWs, and stricter latency requirements. Consequently, in the CPM in NR, the time required to resolve integer ambiguity needs to be further reduced.

Solutions may be needed to address issues related to user positioning based on the CPM using the PRS in NR. Since the PRS is a reference signal with a BW, there should be a common understanding between the higher layers and the UE regarding which frequency within a given PRS is used for phase measurement. In contrast, existing NR positioning methods (e.g., OTDOA, AoA, AoD, etc.) do not require specifying or indicating specific frequency resources. However, in CPM-based positioning using the PRS, an additional operation of specifying or reporting a specific frequency may be required.

## CPM positioning method using PRS

In a wireless access system, a user location estimation scenario based on carrier phase measurement (CPM) or carrier phase positioning (CPP) may be considered. CPM refers to a location measurement scheme that calculates the distance between a gNB and a user based on the phase of a specific frequency (carrier), similar to the case where a UE that has received a reference signal for estimating a user's location, configured by a gNB estimates the distance from the gNB to the user based on the time difference between a transmission time of the reference signal and a reception time of the reference signal. In addition, CPM may be a scheme for calculating or estimating the distance between UEs based on the phase of a specific frequency, similar to the case where a user that has received a reference signal configured for location estimation between users (or UEs) estimates the distance from a UE that has transmitted the reference signal to a UE that has received the reference signal based on the time difference between a transmission time of the reference signal and a reception time of the reference signal. In order to eliminate a clock error or timing error of the transmitter and the receiver in such a distance estimation scheme, the following methods may be considered.

Specifically, in relation to elimination of a clock error or timing error of a transmitter and a receiver, differencing may be used to obtain the difference between signals received from different transmitters at a single receiver and/or the difference between signals received from the same transmitter at different receivers. When performing the differencing, a UE needs to determine a pair of PRSs for which differencing is to be performed and the result of the differencing is to be reported, among received PRSs. Hereinbelow, methods of indicating and determining a (PRS) pair for such differencing will be described.

Although a differencing operation is described below on the assumption of CPM, the differencing operation may also be applied to positioning techniques other than CPM because the purpose of differencing is to eliminate a Tx clock (timing) error and an Rx clock (timing) error. For example, the differencing operation described below may be simply extended and applied to a timing-based (position) estimation method (e.g., OTDOA, RTT, and so on) and an angle-based (position) estimation method (e.g., AoD, AoA, and so on). Herein, the differencing may be for a measurement in the time domain or the angle/spatial domain, not the phase domain.

Alternatively, a case may be considered in which when a PRS indicated by an LMF or gNB is received, CPM is performed. Double differencing considered for CPM in the existing GNSS/GPS may be a technique of eliminating the offset of a transmission/reception (Tx/Rx) clock from an absolute time. In short, double differencing is a method in which a single Rx UE measures the reception time of each of signals transmitted from different Tx UEs to eliminate an Rx clock error, and a common term, Rx clock error is eliminated through the difference between measured reception times, and a method in which different Rx UEs measure the reception times of a signal transmitted from a single Tx UE to eliminate a Tx clock error, and a common error term, Tx clock error is eliminated through the difference between the measured reception times. Herein, the clock error may be a timing error such as an error at a slot boundary of the Tx UE or the Rx UE (in a packet transmission system such as NR).

For CPM in NR, differencing (e.g., measurement of a phase difference) needs to be performed for the purpose of eliminating a Tx/Rx clock error, as in the GPS/GNSS. However, from the perspective of the UE, it may not always capable of receiving a specific TRP's PRS or securing a sufficient SNR. In addition, when differencing is performed simultaneously and the UE reports a reception phase difference, the UE needs to inform the LMF of a pair of PRSs for which the differencing is among a plurality of PRSs, and even a reference (i.e., A-B or B-A) based on which the differencing has been performed. Further, when there is a positioning reference unit (PRU) whose exact location is known, similar to the real time kinematic (RTK) of the GPS/GNSS, a reference for the differencing may be configured/determined as a PRS transmitted by the PRU. In this regard, when the UE is configured with CPM, it may expect to receive or be configured with information about a candidate pair for differencing. A method of determining a (PRS) pair for the above-described differencing by a UE will be described below in detail.

For estimating a UE location using CPM, the UE may be configured with PRS resources and instructed to measure and report a measurement result for the PRS resources by an LMF or a gNB. When differencing is configured, a single report may be based on a plurality of (PRS) resources, compared to a method of measuring and reporting, for example, an RSRP or AoA in a configured (PRS) resource by a positioning method in legacy NR (i.e., compared to one report being for a single resource). For example, for the purpose of eliminating an Rx clock (timing) error, the UE may be configured to measure each of PRSs received from different TRPs within a specific time, but report the difference between phases measured in two (PRS) resources. In this way, when the UE receiving PRSs performs differencing on measurements and reports the result of the differencing, the UE may need a plurality of (PRS) resources for a single report. Hereinbelow, a plurality of resources required for a single report are defined as a differencing (PRS resource) pair, and a method of determining a differencing pair will be described in detail.

Hereinbelow, TDW represents time domain window, and the UE may determine that measurement and reporting for differencing are possible only for PRS resource(s) received within a corresponding TDW. In other words, PRS resources for which the UE expects to be potentially capable of performing differencing may be received within the TDW.

## (1) Alt. 1

A candidate (PRS) resource set for which differencing may be performed for eliminating a Tx/Rx timing error may be indicated to or configured for the UE. That is, a differencing resource set which is a resource set for differencing may be configured, and the differencing resource set may be indicated and configured separately from a TWD.

The differencing resource set may be a set of two or more PRS resource IDs or PRS resource set IDs or TRP IDs. The UE may report a subcarrierwise phase difference between received PRSs in the differencing resource set or a phase difference of a specific carrier (e.g., center carrier) as a measurement result or include and report it in the measurement result. Alternatively, a reference PRS resource ID, PRS resource set ID, or TRP ID may be indicated for the differencing resource set. When the UE reports a measurement result of the phase difference between PRS resources in the differencing resource set, the UE may report information about the phase difference based on the reference PRS resource. (For purposes such as double/triple differencing, or because it is a candidate even in single differencing) a single PRS resource ID, PRS resource set ID, or TRP ID may exist for a plurality of sets. That is, the UE may report a phase difference or a value derived from the phase difference between a PRS (resource) serving as a reference in the indicated differencing resource set and a PRS (resource) among the PRSs of the indicated differencing resource set. In this case, the UE may report a pair ID indicating a pair for which the report is for, among candidate (differentiating) pairs. That is, when the UE is instructed to measure PRS resources for position estimation in a CPM method by the LMF, the UE may consider that a resource set for differencing (or a differencing resource set) is also indicated. The differencing resource set may be indicated on a frequency layer basis.

Alternatively, in the case where the reference (or reference PRS) in the differencing resource set is not indicated, when reporting the phase difference between two received PRSs, the UE may determine the reference PRS based on a preset condition and measure the phase difference between the determined reference PRS and another PRS. For example, the UE may always report a difference obtained by subtracting a PRS with a lower TRP ID or PRS resource set ID number from a PRS with a higher TRP ID or PRS resource set ID number or a value derived from the difference (i.e., the PRS with the higher TRP ID or PRS resource set ID among a plurality of PRSs may be determined as the reference PRS according to the preset condition). Alternatively, a reference PRS resource ID, PRS resource set ID, or TRP ID for the configured (PRS) resource set(s) may always be indicated to the UE. Therefore, when reporting a phase difference, the UE may always report the phase difference between the PRS serving as the reference and another PRS in the configured resource set.

When the UE reports the phase difference between PRS resources in the above method, a PRS ID may be indicated as a reference in the differencing resource set (i.e., when a reference is indicated by a PRS resource ID). In this case, the UE may report the other PRS resource ID except for the reference out of two PRS resource IDs for which differencing has been performed, or both the other PRS resource ID and a differencing resource set ID. Alternatively, when the UE reports the phase difference between PRS resources, a PRS resource set ID or TRP ID may be indicated as a reference in the differencing resource set. In this case, the UE may report two PRS resource IDs for which differencing has been performed, or the two PRS resource IDs and the differencing resource set ID together. Alternatively, when the UE reports the phase difference between PRS resources in the above method, the UE may receive an indication of a differencing resource set without receiving a PRS resource as a reference or an indication of the PRS resource as the reference. In this case, the UE may report two PRS resource IDs for which differencing has been performed, or the two PRS resource IDs and the differencing resource set ID together.

Alternatively, when the UE reports the phase difference between different PRS resources in a differencing resource set in the above method, a PRS resource, PRS resource set, or TRP that serves as a reference may be indicated. In this case, it is necessary to determine a PRS resource for which differencing is to be performed with the PRS resource received as the reference, for measurement reporting. Alternatively, when the reference is not indicated or configured, it is necessary to determine two PRS resources in the differencing resource set, for which differencing is to be performed, for measurement reporting. In this case, the UE may determine the two PRS resources based on predetermined reception qualities of the PRS resources (e.g., based on associated RSRPs/RSSIs or correlation values), using a PRS resource having the best quality as the reference PRS. Alternatively, the UE may determine the PRS resource having the best quality as the reference PRS according to reception qualities of the PRS resources determined based on UE implementation.

In other words, when the differencing PRS resource set is indicated, but the reference PRS related to the differencing PRS resource set is not indicated, the UE may determine the reference PRS based on the qualities of PRSs received in the differencing PRS resource set. For example, the UE may determine the PRS having the best (reception) quality among the received PRSs as the reference PRS. Additionally, the UE may determine a PRS having the best quality next to that of the reference PRS as the other PRS. In this case, the UE may measure the phase difference between the determined reference PRS and the other PRS and report information about the measured phase difference. In this case, the UE may also report information about the IDs of the reference PRS and the other PRS.

As a method of indicating a differencing candidate resource set for differencing (or a differencing PRS resource set) as described above, the following may be considered. For example, the UE may expect that a resource set for (potential) differencing is or will be indicated through a cell-specific or UE group-specific channel, such as system information. That is, the differencing candidate resource set may be indicated to the UE through a cell-specific or UE group-specific signal/channel by not the LMF but a serving cell. For example, the differencing candidate resource set may be indicated through an SIB. Alternatively, information about a list of differencing candidate resource sets may be indicated to the UE (or LPP) through assistance information by the LMF. Meanwhile, this indication method is only an example, and information about the differencing candidate resource set or the differencing candidate resource sets may be indicated according to other indication methods.

Alternatively, the UE may perform differencing for a specific (PRS) resource pair in the differencing candidate resource set indicated or configured in the above-described method, and report information about the phase value of each of the PRSs of the specific (PRS) resource pair or the phase difference between received PRSs that are the specific (PRS) resource pair. The UE may determine the specific (PRS) resource pair in the differencing candidate resource set, based on a recommendation of the LMF. The recommendation of the LMF may be pre-agreed upon from a first time point when the differencing candidate resource set is indicated to the UE to before a measurement reporting time point for CPM. For example, information about the recommendation of the LMF may be provided in an indication of assistance information for CPM. Alternatively, the information about the recommendation of the LMF may be provided together with the assistance information of the LMF in response to a request for the assistance information from the UE. That is, the UE may be configured with information about a differencing candidate resource set by the LMF, some resource set (i.e., the recommendation of the LMF) of the differencing candidate resource set, for performing differencing of measured phases for UE-based and/or UE-assisted CPM, may be indicated to the UE, and the UE may consider performing differencing on all or some of received resources in the resource set and reporting a result to the LMF. In other words, information about a differencing candidate resource set may be configured for the UE by the LMF, and some resource set (or resource pair) in the differencing candidate resource set may be indicated to the UE by the recommendation of the LMF, and the UE may perform differencing on some or all of received PRSs in the resource set (or resource pair) and report the result of the differencing to the LMF.

Alternatively, the UE may request the LMF to indicate one or more resource pairs for the purpose of performing actual differencing in the differencing candidate resource set, or some resource pairs in the differencing candidate resource set. Alternatively, the UE may provide the LMF with information about one or more resource pairs for the purpose of performing actual differencing in the differencing candidate resource set, or some resource pairs in the differencing candidate resource set, and request the LMF to allow differencing based on the resource pairs. In this case, when the LMP accepts the request of the UE, the UE may report the result of performing differencing for CPM. Alternatively, regardless of whether the LMF accepts the request, the UE may perform differencing for CPM according to the request after the request of the UE, and report the result of the differencing or a measurement result. This method may be useful, when the UE makes the request for a single pair. In other words, the UE may determine at least one PRS resource pair in the configured differencing candidate resource set and provide information about the determined at least one PRS pair to the LMF or the gNB. Thereafter, the UE may receive information about a recommended or requested PRS pair among the at least one PRS pair from the LMF or the gNB, perform differencing based on the provided PRS pair, and report the result of the differencing to the LMF or the gNB.

In the above-described methods, the most appropriate PRS pair for performing differencing may change over time and also depending on the current location of the UE. Since it is difficult for the LMF to configure a different PRS resource/resource set instantaneously, the purpose and utility of the methods lie in preventing misunderstanding with the LMF regarding the LMF's judgment of the actual channel situation of the UE and resources/resource sets on which the actual UE has performed differencing, as well as conflict therewith. In other words, the LMF may have difficulty configuring a specific PRS resource/resource set that is most appropriate for the UE by considering the change of such an appropriate PRS pair over time and according to the location of the UE. Therefore, the LMF may prevent misunderstanding with the UE by configuring a differencing candidate resource set and exchanging information about a PRS pair on which differencing has been performed with the UE.

### (2) Alt. 2

Differencing and reporting may be indicated to or configured for the UE without configuration of a candidate differencing pair or a differencing PRS pair. In this case, the UE may directly determine a PRS resource (set) or PRS pair for which differencing is to be performed.

A reference or PRS pair for differencing may be determined based on a TRP ID or the like, or the PRS pair and/or the reference PRS may be determined based on a PRS resource with the best quality based on predetermined reception qualities of PRS resources (e.g., based on associated RSRP/RSSIs or correlation values). Alternatively, based on the reception qualities of PRS resources determined according to UE implementation, the UE may determine the PRS pair and/or the reference PRS based on the PRS resource with the best quality. In this case (i.e., when differencing is performed based on a PRS resource ID pair selected by the UE according to pre-agreement or a rule or according to UE implementation), the UE may also report information about the reception quality of each of the PRS resources corresponding to the differencing pair in a report for the determined differencing pair.

In other words, when the PRS pair or PRS reference for differencing is not separately indicated, the UE may determine the reference PRS and the PRS pair in the differencing candidate resource set based on the reception qualities of received PRSs in the differencing candidate resource set, measure the phase difference between the PRSs included in the determined PRS pair, and report a measurement result including information about the measured phase difference and information about the reception quality of each of the PRSs determined as the PRS pair.

Alternatively, a reference PRS resource ID, PRS resource set ID, or TRP ID may be indicated to/configured for the UE (without an indication/configuration of a differencing candidate resource set). In this case, the UE may measure the phase difference between a PRS resource corresponding to the reference PRS resource ID, PRS resource set ID, or TRP ID and another PRS, and report measurement information about the measured phase difference to the gNB/LMF. That is, based on the configured reference PRS resource set ID, TRP ID, or resource ID, the UE may measure and report the phase difference between the configured reference and another PRS selected according to a pre-agreement or UE implementation.

When the UE is configured with a reference PRS resource ID and reports the phase difference between PRS resources (or the above-described PRS pair) based on the configured reference PRS ID in the above-described method, the UE may report the other PRS resource ID except for the reference PRS resource ID out of the two PRS resource IDs on which differencing has been performed, together with the measurement report. Alternatively, when the UE is configured with a reference PRS resource set ID and TRP ID and reports the phase difference between PRS resources, the UE may report both PRS resource IDs on which differencing has been performed, together with a measurement report.

FIG. 12 is a diagram illustrating a method of performing a measurement operation related to carrier phase measurement by a UE.

Referring to FIG. 12, the UE may receive positioning configuration information related to carrier phase measurement (hereinafter, phase measurement) from a network (S121). The positioning configuration information may further include information about a differencing resource set for a plurality of PRS resources or a plurality of PRS resource sets or a plurality of TRPs in a pair relationship, to be used for eliminating a timing error. The positioning configuration information may be obtained from system information transmitted through a cell-specific channel, or from assistance information transmitted by an LMF.

The differencing resource set may include information about a plurality of PRS resources or PRS resource sets in a preset pair relationship. For example, the differencing resource set may include information about PRS resources among which at least one PRS resource is mapped to or paired with one PRS resource. For example, the differencing resource set may include information (e.g., PRS resource IDs, PRS resource set IDs, and so on.) about first to $N^{th}$ PRS resources, and information about a mapping/pair relationship for at least one PRS resource to which each of the first to $N^{th}$ PRS resources is mapped/paired. The network may configure/define PRS resources having the mapping relationship/pair relationship in consideration of TRPs suitable for differencing for the phase measurement. For example, the network may map or pair PRS resources transmitted from different TRPs or transmitters. Alternatively, the network may map/pair PRS resources between TRPs in an environment of similar integer ambiguity (e.g., TRPs where similar integer ambiguity is likely to occur) with each other. For example, when a phase change of 360 degrees*n may occur in the phase measurement, the network may map/pair TRPs (or PRS resource sets or PRS resources for the respective TRPs) where similar n values may occur.

In this case, the UE (a single Rx end) may measure the phase difference between the mapped or paired PRS resources included in the differencing resource set included in the positioning configuration information. Since the PRS resources in the pair relationship in the differencing resource set are associated with different transmitters or TRPs, a reception clock error at the UE may be efficiently eliminated from the measured phase difference.

Next, the UE may measure the phase difference between the paired PRS resources based on the differencing resource set included in the positioning configuration information (S123). For example, the UE may perform a phase difference measurement to eliminate a timing error (e.g., a reception clock error of the UE) in the carrier phase measurement based on a plurality of PRS resources or a plurality of PRS resource sets included in the differencing resource set.

Specifically, the UE may measure the phases of two PRS resources in the pair relationship based on the differencing resource set included in the positioning configuration information. The UE may calculate the difference between the measured phases. The UE may determine a reference PRS resource, which is one of the two PRS resources, and determine a pair PRS resource, which is the other PRS resource in the pair relationship or mapping relationship with the reference PRS resource. Specifically, the UE may receive reference information for determining a reference PRS resource from the network, and determine the reference PRS resource based on the reference information. The reference information may be included in the positioning configuration information or transmitted separately. The reference information may include at least one of a reference PRS resource ID, a reference PRS resource set ID, or a reference TRP ID. The UE may determine a PRS resource corresponding to the at least one of the reference PRS resource ID, the reference PRS resource set ID, or the reference TRP ID included in the reference information as the reference PRS resource.

Alternatively, when there is no indication of reference information, the UE may determine a PRS having a highest or lowest ID among the PRS resources (or PRS resource sets or TRPs) included in the differencing resource set as a reference PRS resource. Alternatively, when there is no indication of reference information, the UE may determine a PRS resource or PRS resource set corresponding to a TRP having a highest or lowest ID among TRPs for the PRS resources included in the differencing resource set as a reference PRS resource. Alternatively, when there is no indication of reference information, the UE may determine a reference TRP ID configured for time-difference-of-arrival (TDoA) in relation to positioning as a reference TRP. Alternatively, when there is no indication of reference information, the UE may determine a PRS resource having a highest reception quality among the PRS resources included in the differencing resource set as a reference PRS resource.

When the reference PRS resource is determined, the UE may determine at least one pair PRS resource mapped to/paired with the reference PRS resource based on the differencing resource set. The UE may measure a first phase based on a PRS received in the determined reference PRS resource, and measure a second phase based on a PRS received in the pair PRS resource paired with the reference PRS resource. The UE may calculate a difference value between the first phase and the second phase. The difference value may be a difference value of the second phase from the first phase. For example, when the first phase is 30 degrees and the second phase is 29.2 degrees, the phase difference may be 0.8 degrees, which is 30-29.2. A reception clock error in the UE, which is the receiving end, may be eliminated by the phase difference, as described above. Meanwhile, the phase difference measurement based on the reference PRS resource and the pair PRS resource may be performed based on PRSs received within a preset time window, as described above. The preset time window may be preset based on a time during which the UE may maintain phase continuity for reception. In other words, the reference PRS resource and the pair PRS resource may be PRSs received within the same TDW.

Alternatively, when a plurality of PRS resources are paired with/mapped to the reference PRS resource, the UE may determine a PRS resource having a highest signal quality measurement among the plurality of PRS resources (within the preset time window) as the pair PRS resource. In this case, the UE may measure a phase difference based on the reference PRS resource and the pair PRS resource. Alternatively, when there is no indication of a reference PRS resource, the UE may determine a PRS resource having a highest reception quality among the PRS resources included in the differencing candidate set as the reference PRS resource, and determine a PRS resource having the next highest reception quality as the pair PRS resource. That is, the UE may select/determine the reference PRS resource and the pair PRS resource based on the qualities of signals received in the differencing candidate set, assuming that the PRS resources included in the differencing candidate set are in the mapping or pair relationship with each other.

Next, the UE may report/transmit a measurement result including measurement information about the measured phase difference to the network (S 125). The phase difference is a value set using two PRS resources in the mapping or pair relationship within the differencing resource set, as described above. The UE may transmit, to the network, the measurement result further including information about the reference PRS resource (e.g., a reference PRS resource ID) and/or information about the pair PRS resource (a pair PRS resource ID), together with the measurement information. For example, when there is no indication of a reference PRS resource, the UE may transmit, to the network, the measurement result including the ID of a reference PRS resource directly determined based on the reception quality of the PRS resource ID and/or the PRS resource (i.e., the reception quality of the PRS received in the PRS resource), and/or the ID of the pair PRS resource paired with the reference PRS resource. When there is an indication of a reference PRS, the UE may transmit, to the network, the measurement result further including information about the ID of the pair PRS resource mapped to/paired with the reference PRS resource.

Alternatively, the UE may further include information about a measured signal quality of the pair PRS resource in the measurement result. For example, when the UE determines a PRS resource with the best signal quality measurement among a plurality of PRS resources mapped to/paired with the reference PRS resource as the pair PRS resource, the UE may further include information about a measured signal quality of the determined pair PRS resource in the measurement result and report the measurement result to the network.

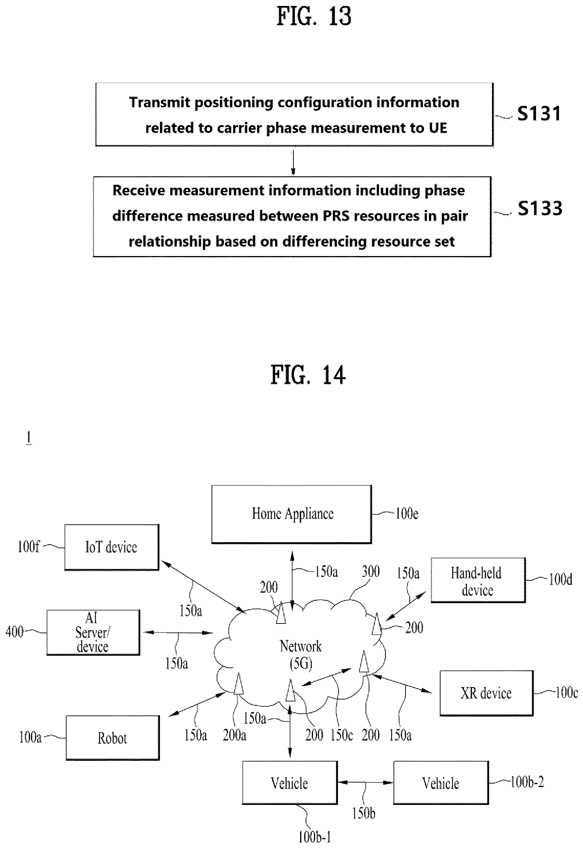

FIG. 13 is a diagram illustrating a method of receiving measurement information related to carrier phase measurement from a UE by a network.

Referring to FIG. 13, the network may transmit positioning configuration information related to phase measurement to a UE (S 131). The positioning configuration information may further include information about a differencing resource set including information about PRS resources in a pair relationship, to be used for eliminating a timing error. The positioning configuration information may be transmitted to the UE through system information transmitted through a cell-specific channel, or may be transmitted to the UE through assistance information transmitted by an LMF.

The differencing resource set may include information about a plurality of PRS resources or PRS resource sets in a preset pair relationship. For example, the differencing resource set may include information about at least one PRS resource mapped to or paired with one PRS resource. For example, the differencing resource set may include information about first to $N^{th}$ PRS resources and information about a mapping/pair relationship for at least one PRS resource which each of the first to $N^{th}$ PRS resource is mapped to/paired with. The network may select TRPs suitable for performing differencing for phase measurement, and configure/define PRS resources (or PRS resource sets) corresponding to the TRPs as PRS resources having the mapping relationship/pair relationship. For example, the network may configure/-determine PRS resources transmitted from different TRPs or transmitters suitable for eliminating a time error in the phase measurement as mapped or paired PRS resources in the differencing resource set. Alternatively, the network may configure/determine PRS resources between TRPs in an environment of similar integer ambiguity (e.g., TRPs where similar integer ambiguity may occur) as PRS resources mapped to/paired with each other in the differencing resource set. For example, in the case where a phase change of 360 degrees*n may occur in phase measurement, the network may map/pair TRPs where similar values of n may occur to/with each other.

Next, the network may receive a measurement result including measurement information about a measured phase difference from the UE (S133).

Specifically, the network may receive, from the UE, the measurement information (or measurement result) about the difference value between measured phases of two PRS resources in the pair relationship in the differencing resource set included in the positioning configuration information. Alternatively, the network may transmit, to the UE, reference information for determining a reference PRS resource in the differencing resource set. The reference information may include at least one of a reference PRS resource ID, a reference PRS resource set ID, or a reference TRP ID. The reference information may be information for indicating/configuring a PRS serving as a reference (e.g., A as a reference in A-B), when a phase difference is measured.

Alternatively, when the network does not provide the reference information, the UE may expect that a PRS with a highest or lowest ID among the PRS resources (or PRS resource sets or TRPs) included in the differencing resource set will be determined as a reference PRS resource. Alternatively, when the network does not provide the reference information, the UE may expect that a PRS resource or PRS resource set corresponding to a TRP with a highest or lowest ID among the TRPs for the PRS resources included in the differencing resource set will be determined as a reference PRS resource. When the network does not provide the reference information, the UE may expect that a PRS with a best signal quality among the PRS resources included in the differencing resource set will be determined as a reference PRS resource. Alternatively, when the network does not provide the reference information, the network may expect that a reference TRP ID configured/indicated for TDoA in relation to positioning will be determined as a reference TRP by the UE. In this case, the network may expect that measurement information about a measured phase difference between the reference PRS resource and a pair PRS resource mapped to/paired with the reference PRS resource will be reported by the UE.

The phase difference measurement based on the reference PRS resource and the pair PRS resource may be performed based on PRSs received within a preset time window, as described above. The preset time window may be configured based on capability information (capability for a maximum time interval during which phase continuity and/or power consistency may be maintained in the UE) received from the UE by the network.

Alternatively, the network may expect that when a plurality of PRS resources are paired with/mapped to the reference PRS resource (within the preset time window), the PRS resource with a highest measured signal quality among the plurality of PRS resources will be determined as the pair PRS resource. In this case, the network may receive a measurement result including information about a phase difference measured based on the reference PRS resource and the pair PRS resource.

Alternatively, the network may receive, from the UE, a measurement result including information about the reference PRS resource (e.g., a reference PRS resource ID) and/or information about the pair PRS resource (a pair PRS resource ID), together with the measurement information. For example, when the network does not indicate a reference PRS resource, the network may receive a measurement result further including a reference PRS resource ID directly determined based on the PRS resource ID and the ID of a pair PRS resource paired with the reference PRS resource. Alternatively, when the network indicates a reference PRS resource, the network may receive a measurement result further including information about the ID of a pair PRS resource mapped to/paired with the reference PRS resource.

Alternatively, the network may receive a measurement result further including information about a signal quality measurement of the pair PRS resource. For example, when the UE determines a PRS resource with a best signal quality measurement among a plurality of PRS resources mapped to/paired with the reference PRS resource as the pair PRS resource, the network may receive the measurement result further including information about the signal quality measurement of the determined pair PRS resource.

The network may perform positioning (CPM or CPP) for the UE based on the phase difference included in the measurement result, or may perform positioning for the UE by considering the measurement result and measurement information from which a Tx error performed at a transmission end is eliminated.

In this manner, as a plurality of PRS resources suitable for differencing are predefined/preconfigured, the UE may easily and fast determine PRS resources on which differencing is to be performed. Further, the network may clearly and fast identify PRS resources for which a phase difference included in measurement information has been measured and reported, based on a pair relationship or mapping relationship. This differencing may effectively improve the positioning accuracy of the UE based on CPP or CPM.

## Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

FIG. 14 illustrates a communication system applied to the present disclosure.

Referring to FIG. 14, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/DL communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

## Examples of wireless devices to which the present disclosure is applied

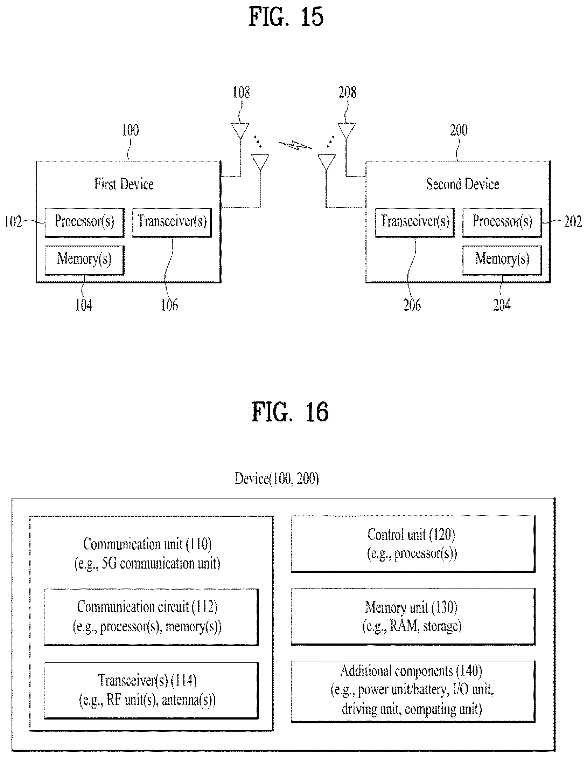

FIG. 15 illustrates a wireless device applicable to the present disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

According to an example, the first wireless device 100 or the UE may include the processor 102 connected to the RF transceiver, and the memory 104. The memory 104 may include at least one program which may perform operations related to the embodiments described with reference to FIGS. 11 to 13.

Specifically, the processor 102 may control the RF transceiver 106 to receive, from a network, positioning configuration information including information about a differencing resource set including a plurality of PRS resources related to elimination of a timing error in carrier phase measurement, perform the measurement based on the differencing resource set, and report, to the network, a measurement result including a phase difference measured using two PRS resources in a pair relationship included in the differencing resource set.

Alternatively, a chipset including the processor 102 and the memory 104 may be configured. In this case, the chipset may include at least one processor, and at least one memory operably connected to the at least one processor and when executed, causing the at least one processor to perform operations. The operations may include receiving, from a network, positioning configuration information including information about a differencing resource set including a plurality of PRS resources related to elimination of a timing error in the carrier phase measurement, performing the measurement based on the differencing resource set, and reporting, to the network, a measurement result including a phase difference measured using two PRS resources in a pair relationship included in the differencing resource set. Further, the at least one processor may perform operations described with reference to FIGS. 11 to 13 based on a program included in the memory.

Alternatively, a computer-readable storage medium including at least one computer program which causes the at least one processor to perform operations is provided. The operations may include receiving, from a network, positioning configuration information including information about a differencing resource set including a plurality of PRS resources related to elimination of a timing error in the carrier phase measurement, performing the measurement based on the differencing resource set, and reporting, to the network, a measurement result including a phase difference measured using two PRS resources in a pair relationship included in the differencing resource set. Further, the computer program may include programs which may perform operations described with reference to FIGS. 11 to 13 based on a program included in the memory.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

According to an embodiment, the BS or the network may include the processor 202, the memory 204, and/or the transceiver 206. The processor 202 may control the transceiver 206 or an RF transceiver to transmit, to the UE, positioning configuration information including information about a differencing resource set including a plurality of PRS resources related to elimination of a timing error in carrier phase measurement, and receive, from the UE, measurement information including a phase difference measured using two PRS resources in a pair relationship included in the differencing resource set.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

## Examples of application of wireless devices to which the present invention is applied

FIG. 16 illustrates another example of a wireless device applied to the present disclosure.

Referring to FIG. 16, wireless devices 100 and 200 may correspond to the wireless devices 100 and 200 of FIG. 15 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 15. For example, the transceiver(s) 114 may include the one or more transceivers 106 and 206 and/or the one or more antennas 108 and 208 of FIG. 15. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 14), the vehicles (100b-1 and 100b-2 of FIG. 14), the XR device (100c of FIG. 14), the hand-held device (100d of FIG. 14), the home appliance (100e of FIG. 14), the IoT device (100f of FIG. 14), a digital broadcast terminal, a hologram device, a public safety device, an MTC device, a medicine device, a fintech device (or a finance device), a security device, a climate/environment device, the AI server/device (400 of FIG. 14), the BSs (200 of FIG. 14), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology may generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure.

**INDUSTRIAL APPLICABILITY**

The above-described embodiments of the present disclosure are applicable to various mobile communication systems.

**Claims**

1. A method of measuring a carrier phase by a user equipment (UE) in a wireless communication system, comprising:

   receiving positioning configuration information from a network;
   performing the measurement based on the positioning configuration information; and
   reporting a measurement result to the network,
   wherein the positioning configuration information includes information about a differencing resource set including a plurality of positioning reference signal (PRS) resources related to elimination of a timing error in the carrier phase measurement, and
   wherein the measurement result includes a phase difference value measured using two PRS resources in a pair relationship included in the differencing resource set.

2. The method of claim 1, wherein the measurement result includes a phase difference value between a reference PRS resource determined based on at least one of a reference PRS resource identification (ID), a reference PRS resource set ID, or a reference transmission and reception point (TRP) ID indicated for the differencing resource set, and a pair PRS resource in the pair relationship with the reference PRS resource.

3. The method of claim 2, wherein the reference PRS resource and the pair PRS resource are related to different TRP IDs.

4. The method of claim 3, wherein the reference TRP ID corresponds to a reference TRP ID configured for time-difference-of-arrival (TDoA).

5. The method of claim 2, wherein based on the reference PRS resource paired with a plurality of PRS resources, the pair PRS resource is determined as a PRS resource with a best measurement quality among the plurality of PRS resources.

6. The method of claim 5, wherein the measurement information further includes information about the measurement quality of the pair PRS resource.

7. The method of claim 1, wherein the measurement information further includes information about an ID of the pair PRS resource.

8. The method of claim 1, wherein the positioning configuration information is received through system information.

9. The method of claim 2, wherein based on the positioning configuration not configuring a reference PRS resource, the UE determines a PRS resource having a highest PRS ID in the differencing resource set as the reference PRS resource.

10. A computer-readable recording medium recording a program for performing the method of claim 1.

11. A user equipment (UE) for measuring a carrier phase in a wireless communication system, comprising

    a radio frequency (RF) transceiver; and
    a processor connected to the RF transceiver,
    wherein the processor controls the RF transceiver to receive, from a network, positioning configuration information including information about a differencing resource set including a plurality of positioning reference signal (PRS) resources related to elimination of a timing error in the carrier phase measurement, performs the measurement based on the positioning configuration information, and reports, to the network, a measurement result including a phase difference value measured using two PRS resources in a pair relationship included in the differencing resource set.

12. The UE of claim 11, wherein the measurement result includes a phase difference value between a reference PRS resource determined based on at least one of a reference PRS resource identification (ID), a reference PRS resource set ID, or a reference transmission and reception point (TRP) ID indicated for the differencing resource set, and a pair PRS resource in the pair relationship with the reference PRS resource.

13. A chipset for measuring a carrier phase in a wireless communication system, comprising

at least one processor; and
at least one memory operably connected to the at least one processor, and when executed, causing the at least one processor to perform operations,
wherein the operations include:
receiving, from a network, positioning configuration information including information about a differencing resource set for elimination a timing error in the carrier phase measurement, performing the measurement based on the positioning configuration information, and reporting, to the network, a measurement result including a phase difference value measured using two PRS resources in a pair relationship included in the differencing resource set.

14. A method of receiving measurement information related to measurement of a carrier phase from a user equipment (UE) by a network in a wireless communication system, comprising:

transmitting, to the UE, positioning configuration information including information about a differencing resource set including a plurality of positioning reference signal (PRS) resources related to elimination of a timing error in the carrier phase measurement; and
receiving, from the UE, measurement information including a phase difference value measured using two PRS resources in a pair relationship included in the differencing resource set.

15. A network for receiving measurement information related to measurement of a carrier phase from a user equipment (UE) in a wireless communication system, comprising:

a radio frequency (RF) transceiver; and
a processor connected to the RF transceiver,
wherein the processor controls the RF transceiver to transmit, to the UE, positioning configuration information including information about a differencing resource set including a plurality of positioning reference signal (PRS) resources related to elimination of a timing error in the carrier phase measurement, and receives, from the UE, measurement information including a phase difference value measured using two PRS resources in a pair relationship included in the differencing resource set.

# FIG. 1

MME / S - GW

MME / S - GW

30

30

S1    S1

S1    S1

20

20

X2

20

eNB

eNB

E-UTRAN

X2

X2

eNB

10

UE

# FIG. 2

# FIG. 3

# FIG. 4

# FIG. 5

System Information

Initial Cell Search    Reception          Random Access Procedure          General DL/UL Tx/Rx

S18

| P/S - SCH & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S11       S12       S13    S14      S15    S16       S17    • DL/UL ACK/NACK
                                                                  • UE CQI/PMI/Rank Report
                                                                      using PUSCH and PUCCH

# FIG. 6

Reference Source

GNSS signals (B)

LPP

Measurements(A,B or A+B) or Location

Target Device

Assistance Data

Location server

UE/SET

E-SMLC/SLP/LMF

radio signals (A)

- E-CID Location Information Transfer
- OTDOA Information Transfer
- Reporting of General Error Situations

NRPPa

Reference Source

ACCESS NODE / BS / TS / NG-RAN

**FIG. 7**

FIG. 8

UE  NG-RAN  AMF  LMF  5GC LCS Entities

1a. Location Service Request

1b. Location Service Request

2. Location Services Request

3a. NG-RAN Procedures

3b. UE Procedures

4. Location Services Response

5a. Location Services Response

5b. Location Service Response

# FIG. 9

| UE | | NG RAN | | AMF | | LMF |
|---|---|---|---|---|---|---|
| LPP | | | | | | LPP |
| NAS | | | | Relay | | |
| RRC | Relay | | NAS | HTTP/2 | | HTTP/2 |
| PDCP | RRC | NGAP | NGAP | | | |
| RLC | PDCP | SCTP | SCTP | TLS | | TLS |
| MAC | RLC | IP | | TCP | | TCP |
| L1 | MAC | L2 | IP | IP | | IP |
| | L1 | L1 | L2 | L2 | | L2 |
| | | | L1 | L1 | | L1 |

NR-Uu / LTE-Uu          NG-C          NLs

EP 4 572 446 A1

## FIG. 10

# FIG. 11

# FIG. 12

| Receive positioning configuration information related to carrier phase measurement | ~S121 |

| Measure phase difference between paired PRS resources based on differencing resource set included in positioning configuration information | ~S123 |

| Report/transmit measurement result including measurement information about phase difference to network | ~S125 |

## FIG. 13

Transmit positioning configuration information related to carrier phase measurement to UE — S131

Receive measurement information including phase difference measured between PRS resources in pair relationship based on differencing resource set — S133

## FIG. 14

# FIG. 15

# FIG. 16

Device(100, 200)

## INTERNATIONAL SEARCH REPORT

| International application No. |
|---|
| **PCT/KR2023/011946** |

| | |
|---|---|
| **A.** | **CLASSIFICATION OF SUBJECT MATTER** |
| | **H04W 64/00**(2009.01)i; **H04W 24/08**(2009.01)i; **H04W 56/00**(2009.01)i; **G01S 5/02**(2010.01)i |

According to International Patent Classification (IPC) or to both national classification and IPC

| | |
|---|---|
| **B.** | **FIELDS SEARCHED** |

Minimum documentation searched (classification system followed by classification symbols)

H04W 64/00(2009.01); G01S 5/02(2010.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포지셔닝 설정(positioning configuration), 측정(measurement), PRS, 자원 집합 (resource set), 페어(pair), 위상 차이(phase difference)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y<br>A | ERICSSON. Techniques mitigating Rx/Tx timing delays. R1-2110349, 3GPP TSG-RAN WG1 Meeting #106-bis-e. 01 October 2021.<br>See pages 1-5, 22-23, 24 and 28. | 1-8,10-15<br>9 |
| Y | CATT. Discussion on improved accuracy based on NR carrier phase measurement. R1-2203469, 3GPP TSG RAN WG1 #109-e. 29 April 2022.<br>See pages 3, 6 and 9. | 1-8,10-15 |
| Y | KR 10-2021-0106004 A (LG ELECTRONICS INC.) 27 August 2021 (2021-08-27)<br>See paragraphs [0015], [0180], [0226]-[0272] and [0281] and figure 19. | 3-6 |
| Y | QUALCOMM INCORPORATED (RAPPORTEUR). Running LPP CR for NR positioning enhancements. R2-2203310, 3GPP TSG-RAN WG2 Meeting #117e. 14 February 2022.<br>See pages 325-326. | 8 |
| A | US 2022-0082649 A1 (QUALCOMM INCORPORATED) 17 March 2022 (2022-03-17)<br>See paragraphs [0089]-[0096] and [0128]-[0142] and figure 7. | 1-15 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 November 2023** | **22 November 2023** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/011946**

| Patent document cited in search report | | | Publication date (day/month/year) | Patent family member(s) | | | Publication date (day/month/year) |
|---|---|---|---|---|---|---|---|
| KR | 10-2021-0106004 | A | 27 August 2021 | CN | 113273267 | A | 17 August 2021 |
| | | | | CN | 113273267 | B | 11 July 2023 |
| | | | | EP | 3905801 | A1 | 03 November 2021 |
| | | | | EP | 3905801 | B1 | 03 May 2023 |
| | | | | US | 11510174 | B2 | 22 November 2022 |
| | | | | US | 2022-0095265 | A1 | 24 March 2022 |
| | | | | US | 2023-0078554 | A1 | 16 March 2023 |
| | | | | WO | 2020-145700 | A1 | 16 July 2020 |
| US | 2022-0082649 | A1 | 17 March 2022 | CN | 116057968 | A | 02 May 2023 |
| | | | | EP | 4214531 | A2 | 26 July 2023 |
| | | | | KR | 10-2023-0067610 | A | 16 May 2023 |
| | | | | WO | 2022-060730 | A2 | 24 March 2022 |
| | | | | WO | 2022-060730 | A3 | 29 December 2022 |

Form PCT/ISA/210 (patent family annex) (July 2022)

45

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LEE, HONGKYU**. An Instantaneous Integer Ambiguity Resolution for GPS Real-Time Structure Monitoring. *Journal of Korean Society of Civil Engineers*, 2014, vol. 34 (1), 342-353